(19) Europäisches Patentamt / European Patent Office / Office européen des brevets

(11) **EP 4 206 902 A1**

(12) **EUROPEAN PATENT APPLICATION**
published in accordance with Art. 153(4) EPC

(43) Date of publication:
**05.07.2023 Bulletin 2023/27**

(21) Application number: **21873989.4**

(22) Date of filing: **17.07.2021**

(51) International Patent Classification (IPC):
**G06F 7/485** $^{(2006.01)}$

(52) Cooperative Patent Classification (CPC):
**G06F 7/485; G06F 7/487**

(86) International application number:
**PCT/CN2021/106965**

(87) International publication number:
**WO 2022/068327 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2020 CN 202011053108**

(71) Applicant: **Huawei Technologies Co., Ltd.
Shenzhen, Guangdong 518129 (CN)**

(72) Inventor: **PAN, Qiuping
Shenzhen, Guangdong 518129 (CN)**

(74) Representative: **Isarpatent
Patent- und Rechtsanwälte Barth
Charles Hassa Peckmann & Partner mbB
Friedrichstrasse 31
80801 München (DE)**

(54) **OPERATION UNIT, METHOD AND APPARATUS FOR CALCULATING FLOATING-POINT NUMBER, AND CHIP AND CALCULATION DEVICE**

(57)     An operation unit, and a floating-point number calculation method and apparatus are provided, and pertain to the field of computer technologies. The operation unit includes a disassembly circuit (221) and an arithmetic unit (222). The disassembly circuit (221) may obtain a mode and a to-be-calculated floating-point number that are included in a calculation instruction, and disassemble the to-be-calculated floating-point number according to a preset rule. Then, the arithmetic unit (222) completes processing of the calculation instruction based on the mode and a disassembled to-be-calculated floating-point number.

FIG. 5

**Description**

**TECHNICAL FIELD**

This application relates to the field of computer technologies, and in particular, to an operation unit, a floating-point number calculation method and apparatus, a chip, and a computing device.

**BACKGROUND**

A floating-point number is an important digital format in computer It consists of three parts: a sign, an exponent and a mantissa. To meet different requirements of different services for data precision, a computer usually needs to support a plurality of floating-point number calculation types.

Currently, for different floating-point number operation types, a plurality of independent operation units are usually designed correspondingly, and each operation unit may implement one floating-point number operation type.

In a process of implementing this application, the inventor finds that the related technology has at least the following problems.

A plurality of operation units that support different floating-point number operation types are independently designed in a chip. When a system uses only one operation unit of one operation type to perform a floating-point number operation, other operation units are in an idle state, which greatly wastes computing resources.

**SUMMARY**

This application provides an operation unit, a floating-point number calculation method and apparatus, a chip, and a computing device, to improve utilization and processing efficiency of the chip.

According to a first aspect, an operation unit is provided. The operation unit includes disassembly circuit and an arithmetic unit; the disassembly circuit is configured to: obtain a mode and a to-be-calculated floating-point number that are included in a calculation instruction; and disassemble the to-be-calculated floating-point number according to a preset rule, where the mode indicates an operation type of the to-be-calculated floating-point number; and the operation unit is configured to complete processing of the calculation instruction based on the mode and a disassembled to-be-calculated floating-point number

[0008]    A control unit in a processor may obtain the calculation instruction from a storage unit or a memory, and send the calculation instruction to the operation unit. The disassembly circuit in the operation unit receives the calculation instruction, disassembles a mantissa of the to-be-calculated floating-point number based on a type of the to-be-calculated floating-point number, a number of disassembled mantissa segments corresponding to a stored floating-point number of the type, and a bit width of each mantissa segment, and outputs disassembled mantissa segments, a sign, and an exponent to the arithmetic unit. The arithmetic unit performs corresponding processing on the mantissa segments, the sign, and the exponent of the to-be-calculated floating-point number based on the mode, to obtain a calculation result. To be specific, in a solution shown in this application, one operation unit can implement floating-point operations with different precision and operation types, and applicability of the operation unit is higher.

In a possible implementation, the to-be-calculated floating-point number is a high-precision floating-point number, and the disassembly circuit is configured to: disassemble the to-be-calculated floating-point number into a plurality of low-precision floating-point numbers based on a mantissa of the to-be-calculated floating-point number.

The disassembly circuit may disassemble the high-precision to-be-calculated floating-point number into the plurality low-precision floating-point numbers, and then multiplex a low-precision floating-point number multiplier and a low-precision floating-point number adder to perform corresponding processing without separately designing a high-precision floating-point number multiplier or a high-precision floating-point number adder, thereby saving costs of the arithmetic unit.

In a possible implementation, an exponent bit width of the disassembled to-be-calculated floating-point number is greater than an exponent bit width of the to-be-calculated floating-point number.

In the solution, the to-be-calculated floating-point number may be disassembled into a floating-point number of a specified type. The to-be-calculated floating-point number of the specified type may be a floating-point number of a non-standard type. To meet a displacement condition of the exponent, it only needs to ensure that the exponent bit width of the floating-point number of the specified type is greater than the exponent bit width of the to-be-calculated floating-point number.

In a possible implementation, the disassembly circuit is configured to: disassemble the to-be-calculated floating-point number into a sign, an exponent, and a mantissa; and disassemble the mantissa of the to-be-calculated floating-point number into a plurality of mantissa segments.

The disassembly circuit may disassemble the mantissa of the to-be-calculated floating-point number To enable a floating-point number multiplier to be multiplexed by multiplication calculations on floating-point numbers with different precision, the floating-point number multiplier in this embodiment of this application may support a lowest-precision floating-point number multiplication. Therefore, a mantissa of the lowest-precision floating-point number may not need to be disassembled. When a mantissa of the high-precision floating-point number is disassembled, a bit width of each mantissa segment obtained through disassembly may be less than or equal to a maximum mantissa bit width supported by the floating-point number multiplier. In addition, to fully use mantissa multiplier resources in each floating-point number multiplier during calculation of different types of floating-point numbers, a mantissa bit width of the lowest-precision floating-point number may be similar to a bit width of each mantissa segment obtained through disassembling mantissas of various types of high-precision floating-point numbers.

In a possible implementation, the arithmetic unit includes a floating-point number multiplier and a floating-point number adder, where the floating-point number multiplier is configured to perform an addition operation on the disassembled to-be-calculated floating-point number, and the floating-point number adder is configured to perform an addition operation on the disassembled to-be-calculated floating-point number.

In a possible implementation, the arithmetic unit includes a plurality of floating-point number multipliers and a plurality of floating-point number adders; a first floating-point number multiplier in the plurality of floating-point number multipliers is configured to: perform an XOR calculation on an input sign of the disassembled to-be-calculated floating-point number, perform an addition calculation on an input exponent of the disassembled to-be-calculated floating-point number, perform a multiplication calculation on input mantissa segments of the disassembled to-be-calculated floating-point number, and output an XOR result of the sign, an addition result of the exponent, and a product result of the mantissa segments to the floating-point number adder. A second floating-point number multiplier in the plurality of the floating-point number multipliers is configured to: perform, in parallel, a multiplication calculation on the input mantissa segments of the to-be-calculated floating-point number, and output the product result of the mantissa segments to the floating-point number adder. The floating-point number adder is configured to: perform an addition calculation on the input product result of the mantissa segments to obtain an addition result of the mantissa segments and output a calculation result of the to-be-calculated floating-point number based on the mode, the addition result of the mantissa segment, the XOR result of the sign, and the addition result of the exponent.

The plurality of the floating-point number multipliers may be disposed in the operation unit. The plurality of the floating-point number multipliers may perform, in parallel, the multiplication calculation on the mantissa segments, or perform, in parallel, a multiplication calculation on the floating-point number. This can effectively improve floating-point number calculation efficiency.

In a possible implementation, the arithmetic unit includes x2 floating-point number multipliers and the floating-point number adder. The disassembly circuit is configured to disassemble the mantissa of each to-be-calculated floating-point number into x mantissa segments, where x is an integer greater than 1.

The operation unit may be provided with the x2 floating-point number multipliers, at least one floating-point number adder, and at least one disassembly circuit. x is a number of mantissa segments disassembled from the mantissa of the highest-precision floating-point number supported by the operation unit. The plurality of multipliers process respectively the disassembled floating-point number in parallel. This improves floating-point number calculation efficiency.

In a possible implementation, the disassembly circuit is configured to: obtain the mode and a to-be-calculated floating-point number vector that are included in the calculation instruction, disassemble the to-be-calculated floating-point number in each to-be-calculated floating-point number vector into a sign, an exponent, and a mantissa, disassemble the mantissa of each to-be-calculated floating-point number into a plurality of mantissa segments, and output a sign combination, an exponent combination, and a mantissa segments combination to the first floating-point number multiplier, where each sign combination includes a sign disassembled from a pair of to-be-calculated floating-point numbers, each exponent combination includes an exponent disassembled from the pair of the to-be-calculated floating-point numbers, each mantissa segments combination includes two mantissa segments disassembled from the pair of the to-be-calculated floating-point numbers, and each pair of the to-be-calculated floating-point numbers includes two to-be-calculated floating-point numbers from different to-be-calculated floating-point number vectors. The first floating-point number multiplier is configured to: perform an XOR calculation on a sign in an input sign combination, perform an addition calculation on an exponent in an input exponent combination, perform a multiplication calculation on mantissa segments in an input mantissa segments combination, and output an XOR result of the sign, an addition result of the exponent, and a product result of the mantissa segments to the floating-point number adder. The second floating-point number multiplier is configured to: perform, in parallel, the multiplication calculation on the mantissa segments in the input mantissa segments combination, and output the product result of the mantissa segments to the floating-point number adder. The floating-point number adder is configured to: perform an addition calculation on a product result of input mantissa segments from a same pair of the to-be-calculated floating-point numbers to obtain an addition result of the mantissa segments corresponding to each pair of the to-be-calculated floating-point numbers, and output a vector calculation result based on the mode, the addition result of the mantissa segments corresponding to each pair of the to-be-calculated floating-point numbers, the XOR result of the sign, and the addition result of the exponent. In this way, the operation unit may perform calculation on the floating-point number vector.

In this application, related calculation on the floating-point number vector can be implemented. When the calculation instruction includes the to-be-calculated floating-point number vector, the disassembly circuit first disassembles the vector into floating-point number scalars, and then disassembles each floating-point number scalar into three parts: a sign, an exponent, and a mantissa. For the high-precision floating-point number, the mantissa needs to be further disassembled to obtain a plurality of mantissa segments. Then, the sign, the exponent, and the mantissa segments are output to the floating-point number multiplier. The floating-point number multiplier performs an XOR calculation on two input signs, performs an addition result on an input exponent, and performs a multiplication calculation on input mantissa segments. Then, the obtained the XOR result of the sign, the addition result of the exponent, and the product result of the mantissa segments are output to the floating-point number adder, the floating-point number adder performs exponent matching and addition on the mantissa segments, the result is output to a normalized processing circuit, and the normalized processing circuit performs normalized processing and outputs the result.

In a possible implementation, the mode indicates that an operation type of the to-be-calculated floating-point number vector is a vector element-wise multiplication operation; and the floating-point number adder is configured to output the addition result of the mantissa segments corresponding to each pair of the to-be-calculated floating-point numbers, the XOR result of the sign, and the addition result of the exponent as a product result of the element.

In this application, the vector element-wise multiplication operation may be implemented. For the vector element-wise multiplication operation, the floating-point number adder only needs to output the addition result of the mantissa segments corresponding to each pair of the to-be-calculated floating-point numbers, the XOR result of the sign, and the addition result of the exponent to the normalized processing circuit for output.

In a possible implementation, the mode indicates that an operation type of the to-be-calculated floating-point number vector is a vector inner product operation; and the floating-point number adder is configured to: perform, based on the addition result of the exponent corresponding to each pair of the to-be-calculated floating-point numbers, exponent matching on the addition result of the mantissa segments corresponding to each pair of the to-be-calculated floating-point numbers; perform the addition calculation on the addition result of each mantissa segment after the exponent matching; and output a vector inner product operation result.

In this application, the vector inner product operation may be further implemented. For the vector inner product operation, the floating-point number adder may further need to calculate an exponent difference based on the addition result of the exponent corresponding to each pair of the to-be-calculated floating-point numbers; perform the exponent matching on the addition result of the mantissa segments corresponding to each pair of the to-be-calculated floating-point numbers based on the calculated exponent difference; and then perform the addition calculation on the addition result of each mantissa segment after the exponent matching. Finally, the calculation result is output to the normalized processing circuit, and the calculation result is a complete floating-point number, including a sign, an exponent, and a mantissa. After the normalized processing circuit performs normalized processing on the calculation result, the calculation result may be output.

In a possible implementation, the mode indicates that an operation type of the to-be-calculated floating-point number vector is a vector element accumulation operation.

The disassembly circuit is configured to: obtain the mode and a first floating-point number vector that are included in the calculation instruction, and generate a second floating-point number vector, where a type of each to-be-calculated floating-point number in the second floating-point number vector is the same as a type of each to-be-calculated floating-point number in the first to-be-calculated floating-point number vector, and a value of each to-be-calculated floating-point number in the second floating-point number vector is 1; and the first floating-point number vector and the second floating-point number vector are used as the to-be-calculated floating-point number vector

The floating-point number adder is configured to: perform, based on the addition result of the exponent corresponding to each pair of the to-be-calculated floating-point numbers, exponent matching on the addition result of the mantissa segments corresponding to each pair of the to-be-calculated floating-point numbers; perform the addition calculation on the addition result of each mantissa segment after the exponent matching; and output a vector element accumulation operation result.

In this application, the vector element accumulation operation may be further implemented. For the vector element accumulation operation, an input to-be-calculated floating-point number is the floating-point number vector After obtaining the calculation instruction, the disassembly circuit determines that the calculation type indicated by the mode is the vector element accumulation operation. In this case, a floating-point number vector of a same type as an input to-be-calculated floating-point number vector may be first generated, and a value of each element in the generated floating-point number vector is 1. The input to-be-calculated floating-point number vector and the generated floating-point number vector may be used as the to-be-calculated floating-point number vector. The disassembly, the multiplication, and the addition are the same as those in the vector inner product operation.

According to a second aspect, a floating-point number calculation method is provided. The method includes: obtaining a mode and a to-be-calculated floating-point number that are included in a calculation instruction, disassembling the to-be-calculated floating-point number according to a preset rule, where the mode indicates an operation type of the to-be-calculated floating-point number; and completing processing of the calculation instruction based on the mode and a disassembled to-be-calculated floating-point number

**[0031]** A control unit in a processor may obtain the calculation instruction from a storage unit or a memory, and send the calculation instruction to an operation unit. A disassembly circuit in the operation unit receives the calculation instruction, disassembles a mantissa of the to-be-calculated floating-point number according to a type of the to-be-calculated floating-point number, a number of disassembled mantissa segments corresponding to a stored floating-point number of the type and a bit width of each mantissa segment, and correspondingly processes disassembled mantissa segments, a sign, and an exponent to obtain a calculation result. To be specific, in the solution shown in this application, one operation unit may implement different types of operations.

In a possible implementation, the to-be-calculated floating-point number is a high-precision floating-point number, and the disassembling the to-be-calculated floating-point number according to a preset rule includes: disassembling the to-be-calculated floating-point number into a plurality of low-precision floating-point numbers based on a mantissa of the to-be-calculated floating-point number

**[0033]** The operation unit may disassemble the high-precision to-be-calculated floating-point number into the plurality low-precision floating-point numbers, and then multiplex a low-precision floating-point number multiplier and a low-precision floating-point number adder to perform corresponding processing without separately designing a high-precision floating-point number multiplier or a high-precision floating-point number adder, thereby saving costs of an arithmetic unit.

In a possible implementation, an exponent bit width of the disassembled to-be-calculated floating-point number is greater than an exponent bit width of the to-be-calculated floating-point number.

The operation unit may disassemble the to-be-calculated floating-point number into a floating-point number of a specified type. The to-be-calculated floating-point number of the specified type may be a floating-point number of a non-standard type. To meet a displacement condition of the exponent, it only needs to ensure that the exponent bit width of the floating-point number of the specified type is greater than the exponent bit width of the to-be-calculated floating-point number.

In a possible implementation, the disassembling the to-be-calculated floating-point number according to a preset rule includes: disassembling the to-be-calculated floating-point number into a sign, an exponent, and a mantissa; and disassembling the mantissa of the to-be-calculated floating-point number into a plurality of mantissa segments.

The operation unit may disassemble the mantissa of the to-be-calculated floating-point number. To enable a floating-point number multiplier in the operation unit to be multiplexed by multiplication calculations on floating-point numbers with different precision, the floating-point number multiplier in this embodiment of this application may support a lowest-precision floating-point number multiplication. Therefore, a mantissa of the lowest-precision floating-point number may not need to be disassembled. When a mantissa of the high-precision floating-point number is disassembled, a bit width of each mantissa segment obtained through disassembly may be less than or equal to a maximum mantissa bit width supported by the floating-point number multiplier. In addition, to fully use mantissa multiplier resources in each floating-point number multiplier during calculation of different types of floating-point numbers, a mantissa bit width of the lowest-precision floating-point number may be similar to a bit width of each mantissa segment obtained through disassembling mantissas of various types of high-precision floating-point numbers.

In a possible implementation, the operation unit performs an XOR calculation on the sign of the disassembled to-be-calculated floating-point number to obtain an XOR result of the sign, performs an addition calculation on the exponent of the disassembled to-be-calculated floating-point number to obtain an addition result of the exponent, performs a multiplication calculation on the mantissa segments from different disassembled to-be-calculated floating-point numbers and outputs a product result of the mantissa segments, and performs an addition calculation on the product result of the mantissa segments to obtain an addition result of the mantissa segments. The operation unit obtains a calculation result of the to-be-calculated floating-point number based on the mode, the addition result of the mantissa segments, the XOR result of the sign, and the addition result of the exponent. Only one operation unit can be used to complete the operation of floating-point numbers with different precisions in different modes.

In a possible implementation, the obtaining a mode and a to-be-calculated floating-point number that are included in a calculation instruction, and disassembling the to-be-calculated floating-point number according to a preset rule includes: obtaining the mode and a to-be-calculated floating-point number vector that are included in the calculation instruction, and disassembling the to-be-calculated floating-point number in each to-be-calculated floating-point number vector into the sign, the exponent, and the mantissa to obtain a plurality of sign combinations, exponent combinations, and mantissa segments combinations, where each sign combination includes a sign disassembled from a pair of to-be-calculated floating-point numbers, each exponent combination includes an exponent disassembled from the pair of the to-be-calculated floating-point numbers, each mantissa segments combination includes two mantissa segments disassembled from the pair of the to-be-calculated floating-point numbers, and each pair of the to-be-calculated floating-point numbers includes two to-be-calculated floating-point numbers from different to-be-calculated floating-point number vectors. The performing an XOR calculation on the sign of the disassembled to-be-calculated floating-point number to obtain an XOR result of the sign; performing an addition calculation on the exponent of the disassembled to-be-calculated floating-point number to obtain an addition result of the exponent; and performing a multiplication calculation on the mantissa segments from different disassembled to-be-calculated floating-point numbers to obtain a product result of the mantissa segments includes: performing an XOR calculation on a sign in each sign combination to obtain an XOR result of the sign corresponding to the sign combination; performing an addition calculation on an exponent in each exponent combination to obtain an addition result of the exponent; and performing a multiplication calculation on mantissa segments in each mantissa segments combination to obtain a product result of the mantissa segments. The performing an addition calculation on the product result of the mantissa segments to obtain an addition result of the mantissa segments, and obtaining a calculation result of the to-be-calculated floating-point number based on the mode, the addition result of the mantissa segments, the XOR result of the sign, and the addition result of the exponent includes: performing, based on a fixed displacement value corresponding to the product result of each mantissa segment, an addition calculation on a product result of the mantissa segments from a same pair of the to-be-calculated floating-point numbers to obtain an addition result of the mantissa segments corresponding to each pair of the to-be-calculated floating-point numbers, and outputting a vector calculation result based on the mode, the addition result of the mantissa segments corresponding to each pair of the to-be-calculated floating-point numbers, the XOR result of the sign, and the addition result of the exponent.

In this application, related calculation on the floating-point number vector can be implemented. When the calculation instruction includes the to-be-calculated floating-point number vector, the operation unit first disassembles the vector into floating-point number scalars, and then disassembles each floating-point number scalar into three parts: a sign, an exponent, and a mantissa. For the high-precision floating-point number, the mantissa needs to be further disassembled to obtain a plurality of mantissa segments. Then, an XOR calculation is performed on signs of the two floating-point number scalars at corresponding positions in two floating-point number vectors, the addition calculation is performed on the exponent, and the multiplication calculation is performed on the mantissa segments. Then, exponent matching and addition are performed on the obtained product result of the mantissa segments, and a result is output to a normalized processing circuit. The normalized processing circuit performs normalized processing and outputs the result.

In a possible implementation, the mode indicates that an operation type of the to-be-calculated floating-point number vector is a vector element-wise multiplication operation. The outputting a vector calculation result corresponding to the plurality of the to-be-calculated floating-point number vectors based on the mode, the addition result of the mantissa segments corresponding to each pair of the to-be-calculated floating-point numbers, the XOR result of the sign, and the addition result of the exponent includes: outputting the addition result of the mantissa segments corresponding to each pair of the to-be-calculated floating-point numbers, the XOR result of the sign, and the addition result of the exponent as a product result of the element.

In this application, the vector element-wise multiplication operation may be implemented. For the vector element-wise multiplication operation, the operation unit only needs to output the addition result of the mantissa segments corresponding to each pair of the to-be-calculated floating-point numbers, the XOR result of the sign, and the addition result of the exponent to the normalized processing circuit for output.

In a possible implementation, the mode indicates that an operation type of the to-be-calculated floating-point number vector is a vector inner product operation. The outputting a vector calculation result corresponding to the plurality of the to-be-calculated floating-point number vectors based on the mode, the addition result of the mantissa segments corresponding to each pair of the to-be-calculated floating-point numbers, the XOR result of the sign, and the addition result of the exponent includes: performing, based on the addition result of the exponent corresponding to each pair of the to-be-calculated floating-point numbers, exponent matching on the addition result of the mantissa segments corresponding to each pair of the to-be-calculated floating-point numbers; performing the addition calculation on the addition result of each mantissa segment after the exponent matching; and outputting a vector inner product operation result.

In this application, the vector inner product operation may be further implemented. For the vector inner product operation, the operation unit may further need to calculate an exponent difference based on the addition result of the exponent corresponding to each pair of the to-be-calculated floating-point numbers; perform the exponent matching on the addition result of the mantissa segments corresponding to each pair of the to-be-calculated floating-point numbers based on the calculated exponent difference; and then perform the addition calculation on the addition result of each mantissa segment after the exponent matching. Finally, the calculation result is output to the normalized processing circuit, and the calculation result is a complete floating-point number, including a sign, an exponent, and a mantissa. After the normalized processing circuit performs normalized processing on the calculation result, the calculation result may be output.

In a possible implementation, the mode indicates that an operation type of the to-be-calculated floating-point number vector is a vector element accumulation operation. The obtaining a mode and a to-be-calculated floating-point number that are included in a calculation instruction includes: obtaining the mode and a first floating-point number vector that are included in the calculation instruction, and generating a second floating-point number vector, where a type of each to-be-calculated floating-point number in the second floating-point number vector is the same as a type of each to-be-calculated floating-point number in the first to-be-calculated floating-point number vector, and a value of each to-be-calculated floating-point number in the second floating-point number vector is 1; and the first floating-point number vector and the second floating-point number vector are used as the to-be-calculated floating-point number vector. The outputting a vector calculation result corresponding to the plurality of the to-be-calculated floating-point number vectors based on the mode, the addition result of the mantissa segments corresponding to each pair of the to-be-calculated floating-point numbers, the XOR result of the sign, and the addition result of the exponent includes: performing, based on the addition result of the exponent corresponding to each pair of the to-be-calculated floating-point numbers, exponent matching on the addition result of the mantissa segments corresponding to each pair of the to-be-calculated floating-point numbers; performing the addition calculation on the addition result of each mantissa segment after the exponent matching; and outputting a vector element accumulation operation result.

In this application, the vector element accumulation operation may be further implemented. For the vector element accumulation operation, an input to-be-calculated floating-point number is the floating-point number vector After obtaining the calculation instruction, the operation unit determines that the calculation type indicated by the mode is the vector element accumulation operation. In this case, a floating-point number vector of a same type as an input to-be-calculated floating-point number vector may be first generated, and a value of each element in the generated floating-point number vector is 1. The input to-be-calculated floating-point number vector and the generated floating-point number vector may be used as the to-be-calculated floating-point number vector. The disassembly, the multiplication, and the addition are the same as those in the vector inner product operation. According to a third aspect, a floating-point number calculation apparatus is provided, where the apparatus includes modules configured to perform the floating-point number calculation method according to any one of the second aspect or the possible implementations of the second aspect.

According to a third aspect, a chip is provided. The chip includes at least one operation unit according to the first aspect.

According to a fourth aspect, a computing device is provided. The computing device includes a mainboard and the chip according to the third aspect, and the chip is disposed on the mainboard.

The technical solutions provided in embodiments of this application bring the following beneficial effects.

The operation unit includes a disassembly circuit and an arithmetic unit. The disassembly circuit may obtain a mode and a to-be-calculated floating-point number that are included in a calculation instruction, and disassemble the to-be-calculated floating-point number according to a preset rule. Then, the operation unit completes processing of the calculation instruction based on the mode and a disassembled to-be-calculated floating-point number. In this application, the mode in the calculation instruction indicates an operation type of the to-be-calculated floating-point number To be specific, one operation unit in this application may be used for a plurality of different operation types.

## BRIEF DESCRIPTION OF DRAWINGS

FIG. 1 is a schematic composition diagram of a floating-point number according to an embodiment of this application;
FIG. 2 is a schematic composition diagram of a floating-point number according to an embodiment of this application;
FIG. 3 is a schematic composition diagram of a floating-point number according to an embodiment of this application;
FIG. 4 is a diagram of a logical architecture of a chip according to an embodiment of this application;
FIG. 5 is a schematic diagram of a structure of an operation unit according to an embodiment of this application;
FIG. 6 is a schematic diagram of a structure of a disassembly circuit according to an embodiment of this application;
FIG. 7 is a schematic arrangement diagram of an adder according to an embodiment of this application;
FIG. 8 is a flowchart of a floating-point number calculation method according to an embodiment of this application;
FIG. 9 is a flowchart of a floating-point number calculation method according to an embodiment of this application;
FIG. 10 is a schematic diagram of a structure of an operation unit according to an embodiment of this application;
FIG. 11 is a schematic diagram of a structure of a floating-point number calculation apparatus according to an embodiment of this application; and
FIG. 12 is a schematic diagram of a structure of a computing device according to an embodiment of this application.

## DESCRIPTION OF EMBODIMENTS

To facilitate understanding of the technical solutions provided in embodiments of this application, the following first describes composition of several common types of floating-point numbers and calculation on several common types of floating-point number vectors.

1. Half-precision floating-point number.

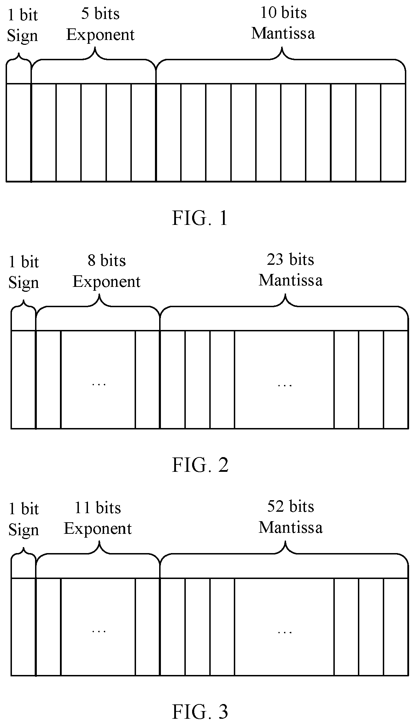

As shown in FIG. 1, a half-precision floating-point number FP16 occupies 16 bits in computer storage, including a sign, an exponent, and a mantissa. To be specific, a bit width of the sign is 1 bit, a bit width of the exponent is 5 bits, and a bit width of the mantissa is 10 bits (a decimal part of the mantissa). In addition to the stored 10-bit decimal part, the mantissa further includes a hidden 1-bit integer part, that is, the mantissa has a total of 11 bits.

2. Single-precision floating-point number

**[0054]** As shown in FIG. 2, a single-precision floating-point number FP32 occupies 32 bits in computer storage, including a sign, an exponent, and a mantissa. To be specific, a bit width of the sign is 1 bit, a bit width of the exponent is 8 bits, and a bit width of the mantissa is 23 bits (a decimal part of the mantissa). In addition to the stored 23-bit decimal part, the mantissa further includes a hidden 1-bit integer part, that is, the mantissa has a total of 24 bits.

3. Double-precision floating-point number.

As shown in FIG. 3, a double-precision floating-point number FP64 occupies 64 bits in computer storage, including a sign, an exponent, and a mantissa. To be specific, a bit width of the sign is 1 bit, a bit width of the exponent is 11 bits, and a bit width of the mantissa is 52 bits (a decimal part of the mantissa). In addition to the stored 52-bit decimal part, the mantissa further includes a hidden 1-bit integer part, that is, the mantissa has a total of 53 bits.

4. Floating-point number vector element-wise multiplication (element-wise multiplication).

$$\vec{A} * \vec{B} = [a_1, \ a_2, \ ...a_n] * [b_1, \ b_2, \ ...b_n] = [a_1 * b_1, \ a_2 * b_2, \ ...a_n * b_n]$$

$\vec{A}$ and $\vec{B}$ are floating-point number vectors, and $a_1$, $a_2...a_n$ and $b_1$, $b_2...b_n$ are floating-point numbers.

5. Floating-point number vector inner product operation.

$$\vec{A} \cdot \vec{B}^T = [a_1, \ a_2, \ ...a_n] * [b_1, \ b_2, \ ...b_n]^T = [a_1 * b_1 + a_2 * b_2 + ...a_n * b_n]$$

$\vec{A}$ and $\vec{B}$ are floating-point number vectors, and $a_1$, $a_2...a_n$ and $b_1$, $b_2...b_n$ are floating-point numbers.

6. Floating-point number element accumulation operation.

$\vec{A} = [a_1, a_2, ...a_n]$, and element accumulation is: $c = a_1 + a_2 + ...a_n$.

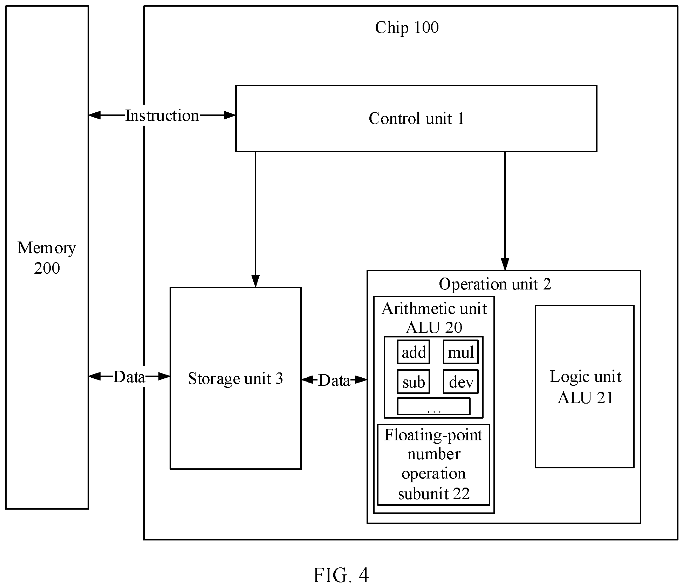

The following describes a system architecture in this application with reference to FIG. 4.

As shown in FIG. 4, the system architecture in this application is a logical architecture of a chip 100, including a control unit 1, an operation unit 2, and a storage unit 3 (for example, a cache). The control unit 1, the operation unit 2, and the storage unit 3 are connected in pairs by using an internal bus. The control unit 1 is configured to send an instruction to the storage unit 3 and the operation unit 2, to control the storage unit 3 and the operation unit 2. The operation unit 2 is configured to receive the instruction sent by the control unit 1, and perform corresponding processing based on the instruction, for example, perform the method for multiplication calculation on the floating-point number provided in this application. The storage unit 3 may also be referred to as a cache. The storage unit 3 may store data, for example, may store a to-be-calculated floating-point number The operation unit 2 may include an arithmetic unit ALU 20 configured to perform an arithmetic operation, and a logic unit ALU 21 configured to perform a logical operation. The arithmetic logic unit ALU 20 may be provided with subunits that respectively perform basic operations such as addition (add), subtraction (sub), multiplication (mul), division (dev), and additional operations thereof, and may further be provided with a floating-point number operation subunit 22 configured to perform a multi-mode floating-point number operation, and the floating-point number operation subunit 22 may execute the floating-point number calculation method provided in this application. The logic unit ALU 21 may be provided with subunits that respectively perform operations such as displacement, logic and (and), logic or (or) and comparison of two values.

The chip 100 may be further connected to a memory 200, and is configured to perform data exchange and instruction transmission with the memory 200. As shown in FIG. 4, the memory 20 is connected to the control unit 1 and the storage unit 3, and the control unit 1 may obtain, from the memory, an instruction or data stored in the memory 200. For example, the control unit 1 reads the instruction from the memory 200, and further sends the instruction to the operation unit 2, and the operation unit 2 executes the instruction.

It should be noted that the logical architecture of the chip 10 shown in FIG. 4 may be a logical architecture of any chip, for example, a central processing unit (central processing unit, CPU) chip, a graphics processing unit (graphics processing unit, GPU) chip, a field programmable gate array (field-programmable gate array, FPGA) chip, an application-specific integrated circuit (application specific integrated circuits, ASIC) chip, a tensor processing unit (tensor processing unit, TPU) chip, or another artificial intelligence (artificial intelligence, AI) chip. A main difference between different types of chips lies in that proportions of the control unit 1, the storage unit 3, and the operation unit 2 are different.

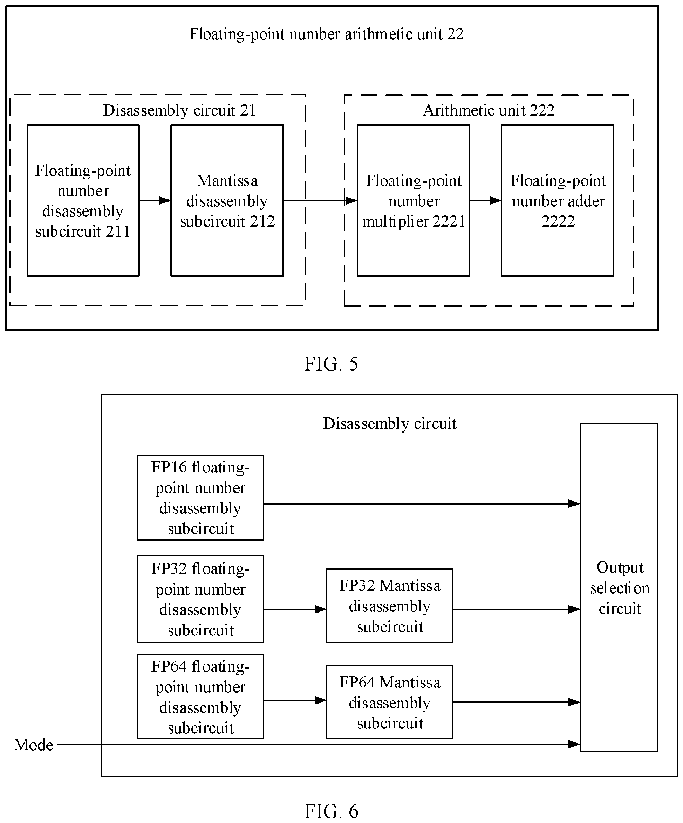

The following further describes the operation unit 2 in FIG. 4 with reference to FIG. 5. As shown in FIG. 5, a floating-point number operation subunit 22 in the operation unit 2 further includes a disassembly circuit 221 and an arithmetic unit 222. The point operation subunit 22 may disassemble the floating-point number by using the disassembly circuit 221, and calculate the disassembled floating-point number by using the arithmetic unit 222, to implement calculation on floating-point numbers with different precision in a plurality of modes.

The disassembly circuit 221 is configured to: obtain a mode and a to-be-calculated floating-point number that are included in a calculation instruction, and disassemble the to-be-calculated floating-point number according to a preset rule. The mode indicates an operation type of the to-be-calculated floating-point number, and the operation type may include a vector inner product operation, a vector element-wise multiplication operation, a vector element accumulation operation, and the like.

The arithmetic unit 222 is configured to complete processing of the calculation instruction based on the mode in the calculation instruction and the disassembled to-be-calculated floating-point number. The arithmetic unit 222 may include a floating-point number multiplier 2221 and a floating-point number adder 2222.

In a possible implementation, that the disassembly circuit 21 disassembles the to-be-calculated floating-point number according to a preset rule may be: disassembling a mantissa of the to-be-calculated floating-point number into a plurality of mantissa segments. After the disassembly is completed, the disassembly circuit 221 outputs the disassembled mantissa segments, content of sign segments of the to-be-calculated floating-point number, and content of exponent segments to the floating-point number multiplier 2221. The floating-point number multiplier 2221 performs an XOR calculation on the content of the sign segments of the to-be-calculated floating-point number, performs an addition calculation on the content of the exponent segments, and performs a multiplication operation on the disassembled mantissa segments. Then, the floating-point number multiplier 2221 outputs an XOR result of the sign segments, an addition result of the exponent segments, and a product result of the mantissa segments to the floating-point number adder 2222, and the floating-point number adder completes an addition of the product result of the mantissa segments, and outputs a calculation result in a form of a floating-point number.

In addition, the floating-point number multiplier may further perform a conventional floating-point number multiplication calculation, and the floating-point number adder may further perform a conventional floating-point number addition calculation.

The following further describes the disassembly circuit 21, the floating-point number multiplier 2211, and the floating-point number adder 2222.

For the disassembly circuit 21, to improve disassembly efficiency of the to-be-calculated floating-point number, two or more disassembly circuits 21 may be disposed at a same operation unit 2. For ease of description, an example in which a same operation unit 2 includes two disassembly circuits 21 is used. When a correlation operation of two to-be-calculated floating-point numbers is performed, each disassembly circuit 21 may separately disassemble one to-be-calculated floating-point number.

As shown in FIG. 5, the disassembly circuit 21 may include a floating-point number disassembly subcircuit 211 and a mantissa disassembly subcircuit 212. The floating-point number disassembly subcircuit 211 is configured to disassemble an input to-be-calculated floating-point number into a sign, an exponent, and a mantissa, and the mantissa disassembly subcircuit 212 is configured to disassemble the mantissa of the to-be-calculated floating-point number into a plurality of mantissa segments.

To enable a floating-point number multiplier to be multiplexed by multiplication calculations on floating-point numbers with different precision, the floating-point number multiplier in this embodiment of this application may support a lowest-precision floating-point number multiplication. Therefore, a mantissa of the lowest-precision floating-point number may not need to be disassembled. When a mantissa of the high-precision floating-point number is disassembled, a bit width of each mantissa segment obtained through disassembly may be less than or equal to a maximum mantissa bit width supported by the floating-point number multiplier. In addition, to fully use mantissa multiplier resources in each floating-point number multiplier during calculation of different types of floating-point numbers, a mantissa bit width of the lowest-precision floating-point number may be similar to a bit width of each mantissa segment obtained through disassembling mantissas of various types of high-precision floating-point numbers.

In this application, a manner of disassembling various types of floating-point numbers may be preset for the disassembly circuit. For example, a floating-point number is disassembled by using a maximum mantissa bit width supported by the floating-point number multiplier. When there are a plurality of floating-point number multipliers, the plurality of floating-point number multipliers may process the disassembled floating-point numbers in parallel. For example, after obtaining the to-be-calculated floating-point number, the disassembly circuit 21 may first determine the type of the to-be-calculated floating-point number. Then, the mantissa of the to-be-calculated floating-point number is disassembled according to a preset disassembly manner corresponding to the floating-point number of the type, to obtain a plurality of mantissa segments. A manner of disassembling various types of floating-point numbers is preset.

A principle for setting the manner of disassembling the floating-point number is as follows: In a case in which the existing floating-point number multiplier is multiplexed, a maximum mantissa bit width a supported by a lowest-precision floating-point number multiplier arithmetic unit may be determined. Then, a is used as a maximum mantissa segment bit width to determine a number of mantissa segments disassembled from each type of floating-point number.

In addition, the floating-point number multiplier may be redesigned according to a requirement. The redesigned floating-point number multiplier needs to support a lowest-precision floating-point number multiplication calculation, and a maximum mantissa bit width supported by the redesigned floating-point number multiplier needs to be greater than a bit width of a mantissa segment disassembled from each type of floating-point number. In addition, to fully use mantissa multiplier resources of the redesigned floating-point number multiplier, the maximum mantissa bit width supported by the redesigned floating-point number multiplier, the mantissa bit width of the lowest-precision floating-point number, and the mantissa segments bit widths disassembled by the various types of high-precision floating-point numbers may be as similar as possible when the disassembly manner is set and the floating-point number multiplier is designed.

The following describes manners of disassembling mantissas of floating-point numbers of several common types.

For an FP16, the FP 16 is usually a lowest-precision floating-point number. Therefore, a mantissa of the FP16 does not need to be disassembled.

For an FP32, because the mantissa of the FP16 has 11 bits in total, and a mantissa of the FP32 has 24 bits in total, to make a mantissa bit width of the FP16 similar to a bit width of each mantissa segment disassembled from the mantissa of the FP32, the mantissa of the FP32 may be disassembled into two mantissa segments, and each mantissa segment has 12 bits.

For the FP64, because the mantissa of the FP16 has 11 bits in total, and each mantissa segment disassembled from the FP32 has 12 bits, a mantissa of the FP64 may be disassembled into four mantissa segments, so that the mantissa bit width of the FP 16, the bit width of each mantissa segment disassembled from the mantissa of the FP32, and a bit width of each mantissa segment disassembled from the mantissa of the FP64 are similar to the maximum mantissa bit width supported by the floating-point number multiplier, where a bit width of three mantissa segments is 13 bits, and a bit width of one mantissa segment is 14 bits.

To more clearly describe how to disassemble mantissas of different types of floating-point numbers, the following describes several examples of disassembling mantissa segments of different types of floating-point numbers.

For example, a mantissa 1.010 1010 1010 1010 1010 1010 of the FP32 may be disassembled into two mantissa segments, which are respectively: $x_1$ = 1010 1010 1010 and $x_2$ = 1010 1010 1010, and each mantissa segment has 12 bits.

For another example, the mantissa 1.010 1010 1010 1010 1010 1010 1010 1010 1010 1010 1010 1010 0101 0 of the FP64 may be disassembled into four mantissa segments, which are respectively $y_1$ = 1010 1010 1010 10, $y_2$ = 10 1010 1010 101, $y_3$ = 0 1010 1010 1010, $y_4$ = 1010 1010 0101 0, where $y_1$ has 14 bits in total, $y_2$, $y_3$, and $y_4$ each has 13 bits.

Because rules for disassembling mantissas of different types of floating-point numbers are different, in each type of floating-point number operation of the floating-point number multiplier, a floating-point number disassembly subcircuit and a mantissa disassembly subcircuit for disassembling the type of floating-point number may be respectively existed.

As shown in FIG. 6, for the operation unit 2 that supports the FP16, the FP32, and the FP64, the disassembly circuit 21 of the operation unit 2 may include a floating-point number disassembly subcircuit corresponding to the FP16, a floating-point number disassembly subcircuit and a mantissa disassembly subcircuit corresponding to the FP32, a floating-point number disassembly subcircuit and a mantissa disassembly subcircuit corresponding to the FP64. In addition, the disassembly circuit 21 may further include an output selection circuit, where the output selection circuit may select a disassembly result output by the corresponding floating-point number disassembly subcircuit or the mantissa disassembly subcircuit for output based on the mode.

The floating-point number multiplier 2221

To improve calculation efficiency of mantissa multiplication of the to-be-calculated floating-point number, N floating-point number multipliers 2221 may be disposed in the operation unit 2. Each floating-point number multiplier may independently perform a group of complete floating-point number multiplication, and the group of complete floating-point number multiplication includes the XOR calculation on the sign, the addition calculation on the exponent, and the multiplication calculation on the mantissa.

In a possible implementation, a quantity N of the floating-point number multipliers 2221 may be a square of a quantity m of the mantissa segments disassembled from the mantissa of the highest-precision floating-point number supported by the operation unit 2. In other words, when the quantity of the floating-point number multipliers is N, a length of the lowest-precision floating-point number vector supported by the operation unit 2 is N, and a length of a high-precision floating-point number vector supported by the operation unit 2 is N/o2, where o is a quantity of mantissa segments disassembled from a mantissa of the high-precision floating-point number vector, and a length of a higher-precision floating-point number vector supported by the operation unit 2 is N/p2, and so on.

For example, if a highest-precision floating-point number supported by the operation unit 2 is the FP64, and a quantity of mantissa segments disassembled from the mantissa of the highest-precision floating-point number is 4, a quantity of floating-point number multipliers 221 may be 16, a length of a lowest-precision floating-point number FP16 vector supported by the operation unit 2 is 16, a length of a high-precision floating-point number FP32 vector supported by the operation unit 2 is 16/4=4, and a length of a floating-point number FP64 vector with higher precision supported by the operation unit is 16/16=1.

In order to implement addition on exponents of to-be-calculated floating-point numbers of a plurality of types, in the N floating-point number multipliers 2221, a bit width of an exponent adder of each floating-point number multiplier needs to be greater than or equal to an exponent calculation bit width of the lowest-precision floating-point number, bit widths of exponent adders of N/o2 floating-point number multipliers need to be greater than or equal to an exponent calculation bit width of a high-precision floating-point number, and in the N/o2 floating-point number multipliers, bit widths of exponent adders of N/p2 floating-point number multipliers are greater than or equal to an exponent calculation bit width of the floating-point number with higher precision, and so on.

Floating-point number adder 2222

In order to implement floating-point number operation types of a plurality of modes, there may be a plurality of floating-point number adders 2222, which are arranged in a tree structure. Specifically, a quantity of floating-point number adders 2222 is related to a quantity of floating-point numbers that can be simultaneously calculated by the floating-point number adder 2222 and a maximum length of the lowest-precision floating-point number vector supported by the operation unit 2.

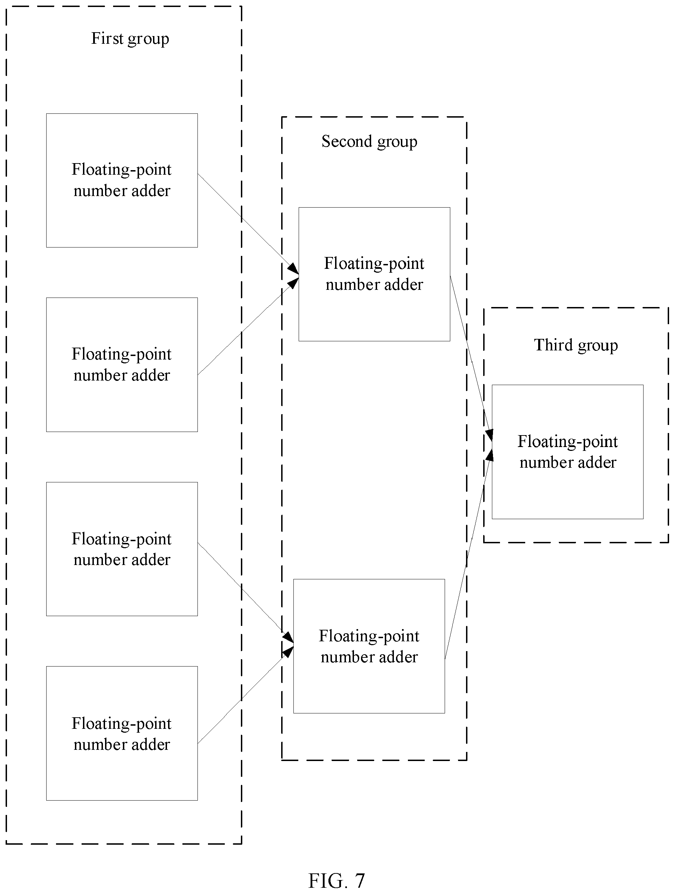

For example, the maximum length of a lowest-precision floating-point number (for example, the FP16) supported by the operation unit 2 is 16, and one floating-point number adder 222 may simultaneously perform addition calculations on four floating-point numbers, or may perform addition calculations on two floating-point numbers. As shown in FIG. 7, to implement the floating-point number vector inner product operation and the floating-point number vector element accumulation operation, the floating-point number adders may be grouped and arranged. The first group of floating-point number adders may perform the addition operation on the multiplication result of the mantissa segments of the floating-point number or the addition operation on the floating-point number For a vector inner product operation of the FP32 vector whose length is 4, after the first group of floating-point number adders complete the addition operation on the multiplication result of the mantissa segments, four addition results of the multiplication result of the mantissa segments may be obtained. For the four addition results, the sign and exponent need to be used for the floating-point number addition. When a floating-point number adder performs addition operations on four high-precision floating-point numbers at the same time, too much displacement will happen when exponent matching is performed on the mantissa, causing a large error. Therefore, for a floating-point number adder that performs a floating-point number addition operation after the first group of floating-point number adders, a floating-point number adder that supports addition operations on two floating-point numbers may be selected. In this way, addition operations of four floating-point numbers corresponding to the addition result of the multiplication result of four mantissa segments need to be implemented by two floating-point number adders, and the two floating-point number adders may be used as a second group of floating-point number adders. In addition, because the vector inner product operation needs to accumulate all floating-point number product results, a floating-point number adder of a third group is further required to perform the addition operation on the addition result obtained by the second group of floating-point number adders.

For another example, the maximum length of a lowest-precision floating-point number (for example, the FP16) supported by the operation unit 2 is 16, and one floating-point number adder may perform addition calculations on two floating-point numbers. To implement the floating-point number vector inner product operation and the floating-point number vector element accumulation operation, the floating-point number adders may be divided into four groups. A first group includes eight floating-point number adders, a second group includes four floating-point number adders, a third group includes two floating-point number adders, and a fourth group includes one floating-point number adder.

It should be noted that, when performing an addition operation on a complete floating-point number, the floating-point number adder may perform an exponent maximum value comparison, an exponent difference calculation, a mantissa exponent matching, and a mantissa addition. When performing the addition operation on the product result of the mantissa segments, the floating-point number adder may directly perform the mantissa exponent matching and the mantissa addition, where a fixed displacement value is used for the mantissa exponent matching.

In addition, to enable the operation unit 2 to output a normalized floating-point number calculation result, the operation unit 2 may further include a normalized processing circuit 423. The normalized processing circuit can complete a conventional mantissa rounding operation and an exponent conversion operation.

The mantissa rounding operation refers to perform a rounding (rounding) operation on a mantissa of a floating-point number to be output and convert it to a standard format, for example, an IEEE754 standard format. The mantissa bit widths corresponding to the FP16, the FP32, and the FP64 are 11 bits, 24 bits, and 53 bits respectively.

The exponent conversion operation is to convert an exponent of a floating-point number to be output to a corresponding exponent format of a standard floating-point number, for example, an IEEE754 annotation format.

For the FP16, an exponent bit width is 5 bits, and a bias (bias) is 15. If an actual exponent value is greater than 16, an exponent value is corrected to 5'b11111, where 5'b represents a 5-bit binary number. If an actual exponent value is less than -14, and an integer bit of a mantissa is 0, an exponent value is corrected to 5'b0. For the FP32, an exponent bit width is 8 bits, and a bias is 127. If an actual exponent value is greater than 128, an exponent value is corrected to 8'b11111111. If an actual exponent value is less than -126 and an integer bit of a mantissa is 0, an exponent value is corrected to 8'b0. For the FP64, an exponent bit width is 11 bits and a bias is 1023. If an actual exponent is greater than 1024, an exponent value is corrected to 11'b11111111111. If an actual exponent is less than -1023 and an integer bit of a mantissa is 0, an exponent value is corrected to 11'bO.

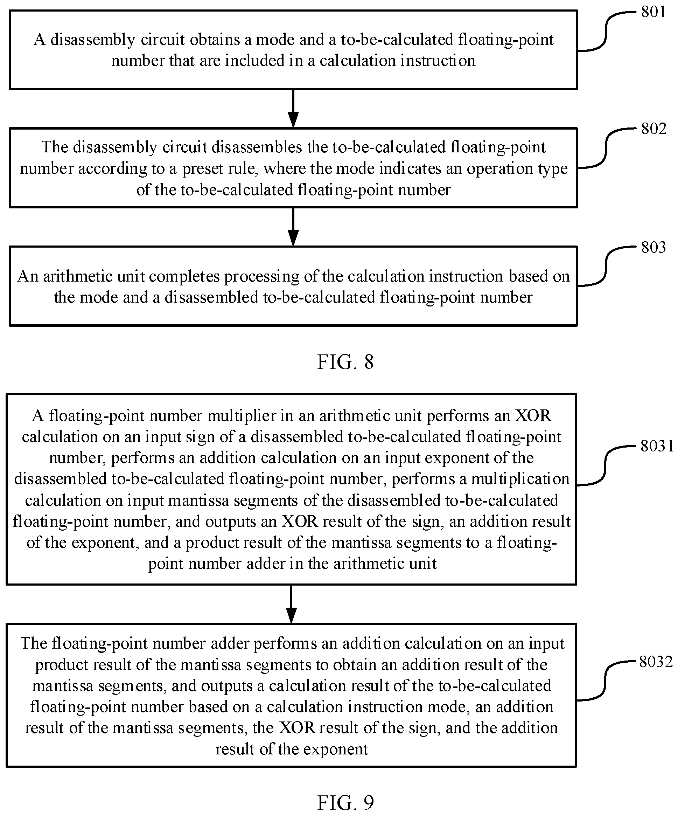

An embodiment of this application further provides a floating-point number calculation method. The method may be implemented by the foregoing operation unit. The operation unit may include a disassembly circuit and an arithmetic unit. Specifically, as shown in FIG. 8, the method may include the following processing procedure.

Step 801. A disassembly circuit obtains a mode and a to-be-calculated floating-point number that are included in a calculation instruction.

In an implementation, a control unit obtains the calculation instruction from a storage unit or a memory, and sends the calculation instruction to the operation unit. The disassembly circuit in the operation unit receives the calculation instruction, and obtains the mode and the to-be-calculated floating-point number that are carried in the calculation instruction. The to-be-calculated floating-point number may be two floating-point number scalars of a same type, or two floating-point number scalars of different types, two floating-point number vectors of a same type and a same length, or two floating-point number vectors of different types and a same length.

Lengths of two floating-point number vectors that may be input into the operation unit are related to a quantity of floating-point number multipliers in the operation unit. Specifically, when the quantity of the floating-point number multipliers is N, a length of the lowest-precision floating-point number vector supported by the operation unit is N, and a length of a high-precision floating-point number vector supported by the operation unit is N/o2, where o is a quantity of mantissa segments disassembled from a mantissa of the high-precision floating-point number vector, and so on.

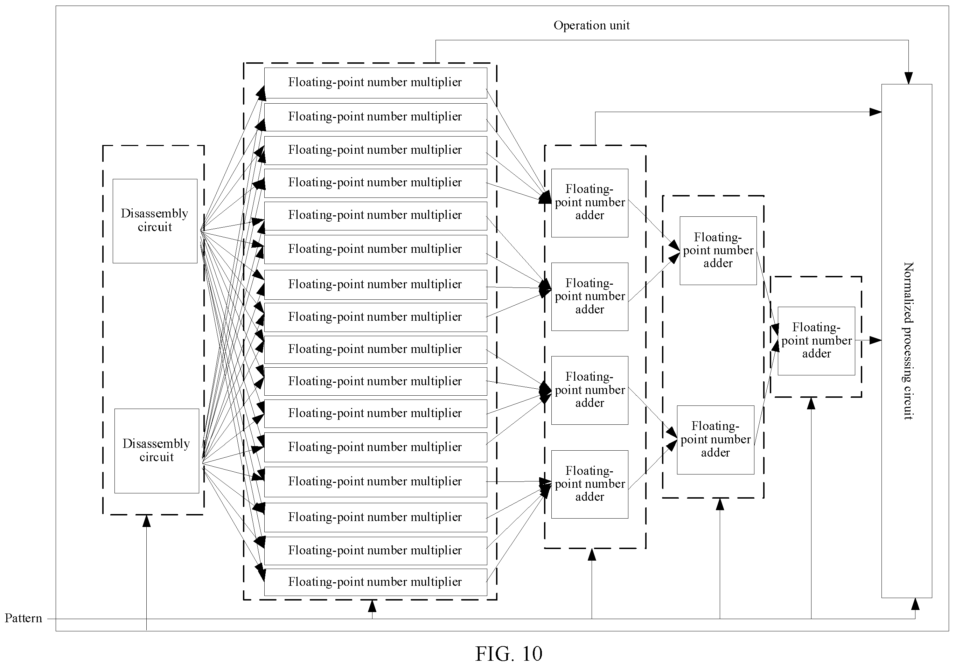

For example, as shown in FIG. 10, the arithmetic unit includes 16 floating-point number multipliers, and two FP16 vectors whose lengths are 16 may be input, or two FP32 vectors whose lengths are 4 may be input, or two FP64 scalars may be input.

Step 802. The disassembly circuit disassembles the to-be-calculated floating-point number according to a preset rule, where the mode indicates an operation type of the to-be-calculated floating-point number.

The operation type indicated by the mode may include a vector element-wise multiplication, a vector inner product, a vector element accumulation, and the like.

In implementation, the disassembly circuit may disassemble a mantissa of the to-be-calculated floating-point number according to a type of the to-be-calculated floating-point number, a number of disassembled mantissa segments corresponding to a stored floating-point number of the type and a bit width of each mantissa segment, and output disassembled mantissa segments, a sign, and an exponent to the arithmetic unit. In addition, when the mantissa segments are output, the mantissa segments need to be sorted according to a preset fixed sequence and then output, so that mantissa segments of the mantissas of different to-be-calculated floating-point numbers that require multiplication calculation may be combined in various possible manners.

With reference to the operation unit shown in FIG. 10, the following describes the disassembly method in step 802 by using an example in which two FP16 vectors whose lengths are 16 are input, two FP32 vectors whose lengths are 4 are input, and two FP64 scalars are input.

Input two FP16 vectors whose lengths are 16.

Each disassembly circuit may disassemble one of the FP16 vectors. The floating-point number disassembly subcircuit in the disassembly circuit disassembles each FP16 into one group of {sign (sign), exponent (exp), and mantissa (mts)} according to occupation widths of a sign, an exponent, and a mantissa in the FP16. The mantissa obtained through disassembling is a mantissa including an integral part. Specifically, the FP64 is disassembled into three parts in a sequence of 1 bit, 5 bits, and 10 bits from a most significant bit to a least significant bit. 1 bit of a first part is the sign, and 5 bits of a second part belong to the exp. For the 10 bits of a third part, 1 (hidden integer bit) is added before the highest-order of the 10 bits to obtain 11 bits as the mts. An FP16 vector may be disassembled into 16 groups of {sign, exp, mts}. In this embodiment of this application, the floating-point number multiplier supports the multiplication calculation on the lowest-precision floating-point number Therefore, the mantissa of the lowest-precision floating-point number FP 16 may not need to be disassembled.

Then, the disassembly circuit inputs each obtained group of {sign, exp, mts} into one floating-point number multiplier. During the input, the group of {sign, exp, mts} may be sequentially input based on a location of the group of {sign, exp, mts} in the FP16 vector, and two groups of {sign, exp, mts} corresponding to the to-be-calculated floating-point numbers at the same location in different vectors may be input into a same floating-point number multiplier.

For example, the two vectors are a vector A (a1, a2, ..., a16) and a vector B (b1, b2, ..., b16). A first to-be-calculated floating-point number a1 in the vector A may be disassembled to obtain {signA1, expA1, mtsA1}, and a first to-be-calculated floating-point number b1 in the vector B may be disassembled to obtain {signB1, expB1, mtsB1}. In this case, {signA1, expA1, mtsA1} and {signB1, expB1, mtsB1} may be input into a same floating-point number multiplier.

Input two FP32 vectors whose lengths are 4.

Each disassembly circuit may disassemble one of the FP32 vectors. First, the floating-point number disassembly subcircuit in the disassembly circuit disassembles each FP32 into one group of {sign, exp, mts} according to occupation widths of a sign, an exponent, and a mantissa in the FP32. Specifically, the FP64 is disassembled into three parts in a sequence of 1 bit, 8 bits, and 23 bits from a most significant bit to a least significant bit. 1 bit of a first part is the sign, and 8 bits of a second part belong to the exp. For the 23 bits of a third part, 1 (hidden integer bit) is added before the highest-order of the 23 bits to obtain 24 bits as the mts. For the FP32 vector, four groups of {sign, exp, mts} may be obtained through disassembling, and a mantissa obtained through disassembling is input to a mantissa disassembly subcircuit. The mantissa disassembly subcircuit disassembles the input mts according to a preset manner of disassembling the FP32. For example, a preset manner of disassembling the FP32 is to disassemble the FP32 into two mantissa segments, and a bit width of each mantissa segment is 24 bits.

For example, the two FP32 vectors are a vector C (c1, c2, c3, c4) and a vector D (d1, d2, d3, d4). For the vector C, a floating-point number in the vector C is first disassembled into {signC1, expC1, mtsC1}, {signC2, expC2, mtsC2}, {signC3, expC3, mtsC3} and {signC4, expC4, mtsC4} according to the occupation widths of the sign, the exponent, and the mantissa in the FP32. Then, according to a preset manner of disassembling the FP64, mtsC1 is disassembled into mtsCIO and mtsC11, mtsC2 is disassembled into mtsC20 and mtsC21, mtsC3 is disassembled into mtsC30 and mtsC31, and mtsC4 is disassembled into mtsC40 and mtsC41, where mtsC10, mtsC20, mtsC30 and mtsC40 indicate mantissa segments of a least significant bit, and mtsC11, mtsC21, mtsC31 and mtsC41 indicate mantissa segments of a most significant bit. Similarly, signs that can be obtained through disassembling the vector D include signD1, signD2, signD3, and signD4, exponents obtained through disassembling include expD1, expD2, expD3, and expD4, and mantissa segments obtained through disassembling include mtsD11, mtsD12, mtsD13, mtsD14, mtsD21, mtsD21, mtsD21, and mtsD21, where mtsD10, mtsD20, mtsD30, and mtsD40 indicate mantissa segments of a least significant bit, and mtsD11, mtsD21, mtsD31 and mtsD41 indicate mantissa segments of a most significant bit.

Mantissa segments of each mantissa in the first FP32 vector are sorted in a sequence of {mts1, mts1, mts0, mts0}, and then each mantissa segment is output to one floating-point number multiplier. Mantissa segments of each mantissa in the second FP32 vector are sorted in a sequence of {mts1, mts0, mts1, mts0}, and then each mantissa segment is output to one floating-point number multiplier.

For example, a mantissa segment of the mantissa mtsC1 of the first to-be-calculated floating-point number c1 in the vector C may be sorted as {mtsC11, mts C11, mtsC10, mtsC10}. Correspondingly, a mantissa segment of the mantissa mtsD1 of the first to-be-calculated floating-point number d1 in the vector D may be sorted as {mtsD11, mtsD10, mtsD11, mtsD10}. After the sorting, the mantissa segments may be output to the floating-point number multiplier according to the sorting. The first mantissa segment in the sorting corresponding to the mtsC1 and the first mantissa segment in the sorting corresponding to the mtsD1 are output to a same floating-point number multiplier according to the sorting, and so on.

It should be noted that the sorting manner of the mantissa segments is merely an example. An objective of sorting and outputting is to enable mantissa segments of the mantissas of the to-be-calculated floating-point numbers at corresponding locations in the two vectors to be combined in various possible manners. A specific sorting manner in which the mantissa segments are output is not limited in this embodiment of this application, provided that the mantissa segments are output in a fixed sorting manner and the foregoing objective is achieved.

In addition, the sign and the exp in each group obtained through disassembling only need to be output to a floating-point number multiplier in which a first mantissa segment in the sorting corresponding to mantissa in a same group are input.

For example, for the sign signC1 and the exponent expC1 of the first to-be-calculated floating-point number c1 in the vector C, the sign signC1 and the exponent expC1 may be input into a same floating-point number multiplier as the first mantissa segment in the sorting corresponding to the mtsC1.

Input two FP64 scalars.

Each disassembly circuit may disassemble one of the FP64 vectors. First, the floating-point number disassembly subcircuit disassembles each FP64 into {sign, exp, mts} according to occupation widths of a sign, an exponent, and a mantissa in the FP64. Specifically, the FP64 is disassembled into three parts in a sequence of 1 bit, 11 bits, and 52 bits from a most significant bit to a least significant bit. 1 bit of a first part is the sign, and 11 bits of a second part belong to the exp. For the 52 bits of a third part, 1 (hidden integer bit) is added before the highest-order of the 52 bits to obtain 53 bits as the mts. Then, the mts is input to the mantissa disassembly subcircuit. Then, the mantissa disassembly subcircuit disassembles the received mts according to a preset manner of disassembling the FP64. For example, a preset manner of disassembling the FP64 is to disassemble the mantissa into four mantissa segments, and bit widths of the mantissa segments are 13 bits, 13 bits, 13 bits, and 14 bits respectively.

For example, two to-be-calculated floating-point numbers are E and F. E may be first disassembled into {signE, expE, mtsE} according to the occupation widths of the sign, the exponent, and the mantissa in the FP64, and then the mtsE is disassembled into mtsE3, mtsE2, mtsE1, and mtsE0 according to the preset manner of disassembling the FP64. mtsE3, mtsE2, mtsE1, and mtsE0 indicate the mantissa segments from a most significant bit to a least significant bit. Similarly, F may be first disassembled into {signF, expF, mtsF}, and then the mtsF is disassembled into mtsF3, mtsF2, mtsF1, and mtsF0, where mtsF3, mtsF2, mtsF1, and mtsF0 represent mantissa segments from a most significant bit to a least significant bit.

Mantissa segments of the mantissa of the first FP64 are sorted in a sequence of {mts3, mts3, mts2, mts3, mts2, mts1, mts3, mts2, mts1, mts0, mts2, mts1, mts0, mts1, mts0, mts0}, and each mantissa segment is output to one floating-point number multiplier. The mantissa segments of the mantissa of the second FP64 are sorted in a sequence of {mts3, mts2, mts3, mts1, mts2, mts3, mts0, mts1, mts2, mts3, mts0, mts1, mts2, mts0, mts1, mts0}, and each mantissa segment is output to one floating-point number multiplier.

For example, the mantissa segments of the mantissa mtsE of the to-be-calculated floating-point number E may be sorted as {mtsE3, mtsE3, mtsE2, mtsE3, mtsE2, mtsE1, mtsE3, mtsE2, mtsE1, mtsE0, mtsE2, mtsE1, mtsE0, mtsE1, mtsE0, mtsE0}. Correspondingly, the mantissa segments of the mantissa mtsF of the vector F may be sorted as {mtsF3, mts2F, mtsF3, mtsF1, mtsF2, mtsF3, mtsF0, mtsF1, mtsF2, mtsF3, mtsF0, mtsF1, mtsF2, mtsF0, mtsF1, mtsF0}. After the sorting, the mantissa segments may be output to the floating-point number multiplier according to the sorting. The first mantissa segment in the sorting corresponding to the mtsE and the first mantissa segment in the sorting corresponding to the mtsF are output to a same floating-point number multiplier according to the sorting, and so on.

It should be noted that the sorting manner of the mantissa segments is merely an example. An objective of sorting and outputting is to enable mantissa segments of the mantissas of the to-be-calculated floating-point numbers at corresponding locations in the two vectors to be combined in various possible manners. A specific sorting manner in which the mantissa segments are output is not limited in this embodiment of this application, provided that the mantissa segments are output in a fixed sorting manner and the foregoing objective is achieved.

In addition, the sign and the exp obtained through disassembling only need to be output to a floating-point number multiplier in which the first mantissa segment in the sorting of mantissa segments corresponding to the mantissa is input.

In a possible implementation, before the mantissa segment is output to the floating-point number multiplier, 0 is added at the most significant bit to the mantissa segment, so that a bit width of the mantissa segment after the added 0 is the same as a multiplication bit width supported by the floating-point number multiplier.

Step 803. An arithmetic unit completes processing of the calculation instruction based on the mode and a disassembled to-be-calculated floating-point number.

In an implementation, step 803 may be implemented by a floating-point number multiplier and a floating-point number adder in the arithmetic unit. Specifically, as shown in FIG. 9, step 803 may include the following processing procedure.

Step 8031. A floating-point number multiplier in the arithmetic unit performs an XOR calculation on an input sign of the disassembled to-be-calculated floating-point number, performs an addition calculation on an input exponent of the disassembled to-be-calculated floating-point number, performs a multiplication calculation on input mantissa segments of the disassembled to-be-calculated floating-point number, and outputs an XOR result of the sign, an addition result of the exponent, and a product result of the mantissa segments to the floating-point number adder in the arithmetic unit.

With reference to the operation unit shown in FIG. 10, for different calculation types, several inputs in the example in step 802 processed in step 8031 are described below.

The floating-point number vector element-wise multiplication. Input two FP16 vectors whose lengths are 16.

Each floating-point number multiplier performs a multiplication operation on input floating-point numbers, specifically, performs an XOR calculation on two input signs, performs an addition calculation on two input exponents, and performs a multiplication calculation on two input mantissa segments. 16 floating-point number multipliers can be executed in parallel.

Each floating-point number multiplier may output an XOR result of the signs, addition result of the exponents, and a product result of the mantissa segments to the normalized processing circuit, and the normalized processing circuit performs normalized processing on the XOR result of the signs, the addition result of the exponents, and the product result of the mantissa segments input by the same floating-point number adder, to obtain a normalized FP16. For the XOR result of the signs, the addition result of the exponents and the product result of the mantissa segments that are respectively input by the four floating-point number adders, the normalized processing circuit may obtain four normalized FP16s as vector element-wise multiplication operation result to be output. Herein, it should be noted that, when the normalized processing circuit performs the normalized processing on the input XOR result of the signs, the addition result of the exponents, and the product result of the mantissa segments, the normalized processing is the same as that performed on the sign, the exponent, and the mantissa of the conventional floating-point number

**[0134]** For the floating-point number vector inner product operation, two FP16 vectors whose lengths are 16 are input.

Each floating-point number multiplier performs a multiplication operation on input floating-point numbers, specifically, performs an XOR calculation on two input signs, performs an addition calculation on two input exponents, and performs a multiplication calculation on two input mantissa segments. 16 floating-point number multipliers can be executed in parallel to obtain 16 floating-point number product results.

The 16 floating-point number product results output by the floating-point number multipliers are divided into four groups, and are respectively output to one floating-point number adder in four floating-point number adders in the first group.

In the floating-point number vector element-wise multiplication, two FP32 vectors whose lengths are 4 are input.

Each floating-point number multiplier performs the multiplication calculation on the input mantissa segments, and 16 floating-point number multipliers may perform, in parallel, the multiplication calculation on the mantissa segments. For the input signs and exponents, the floating-point number multiplier also needs to perform the XOR operation on the signs and the addition operation on the exponents.

After the 16 floating-point number multipliers separately perform the multiplication operation on the input mantissa segments, a product result of the 16 mantissa segments may be obtained. In addition, the 16 mantissa segment product results are divided into four groups, and each group is output to one floating-point number adder in four floating-point number adders in the first group, where all product results of the mantissa segments in a same group are from a same to-be-calculated floating-point number

**[0140]** For example, based on the foregoing example of disassembling the FP32 vector and sorting the mantissa segments, herein, in the four groups obtained by dividing the 16 product results of the mantissa segments, product results of the mantissa segments included in the first group may be mtsC 11 * mtsD 11, mtsC 11 * mtsD 10, mtsC10* mtsD 1 1 and mtsC10* mtsD10; product results of the mantissa segments included in the second group may be mtsC21* mtsD21, mtsC21* mtsD20, mtsC20* mtsD21 and mtsC20* mtsD20; and product results of the mantissa segments included in the third group and the fourth group may be deduced by analogy.

In the floating-point number vector element-wise multiplication, two FP64 scalars are input.

Each floating-point number multiplier performs the multiplication calculation on the input mantissa segments, and 16 floating-point number multipliers may perform, in parallel, the multiplication calculation on the mantissa segments. For the input signs and exponents, the floating-point number multiplier also needs to perform the XOR operation on the signs and the addition operation on the exponents.

16 product results of the mantissa segments obtained by the 16 floating-point number multipliers may be divided into four groups, and each group is output to one floating-point number adder in the four floating-point number adders in the first group.

For example, based on the foregoing example of disassembling the FP64 and sorting the mantissa segments, herein, in the four groups obtained by dividing the 16 mantissa segment product results, product results of the mantissa segments included in the first group may be: mtsE3* mtsF3, mtsE3* mtsF2, mtsE2* mtsF3 and mtsE3* mtsF1; product results of the mantissa segments included in the second group may be: mtsE2* mtsF2, mtsE1 *mtsF3, mtsE1* mtsF2 and mtsE0* mtsF3; product results of the mantissa segments included in the third group may be: mtsE3* mtsF0, mtsE2* mtsF1, mtsE2* mtsF0 and mtsE0* mtsF2; and product results of the mantissa segments included in the fourth group may be: mtsE1* mtsF1, mtsE1* mtsF0, mtsE0* mtsF1 and mtsE0* mtsF0.

It should be noted that processing of the floating-point number vector inner product operation of the FP32 and processing of the floating-point number vector element-wise multiplication operation in step 8031 are the same. Therefore, the processing of the floating-point number vector inner product operation of the FP32 in step 8031 is not described again.

Step 8032. The floating-point number adder performs an addition calculation on an input product result of the mantissa segments to obtain an addition result of the mantissa segments, and outputs a calculation result of the to-be-calculated floating-point number based on a calculation instruction mode, an addition result of the mantissa segments, the XOR result of the sign, and the addition result of the exponent.

With reference to the operation unit shown in FIG. 10, for different calculation types, several inputs in the example in step 802 processed in step 8033 are described below.

In the floating-point number vector element-wise multiplication, two FP32 vectors whose lengths are 4 are input.

Each floating-point number adder in the first group obtains a corresponding fixed displacement value according to the type of the to-be-calculated floating-point number indicated by the input mode. Then, for the input product result of the mantissa segments of the floating-point number, the exponent matching is performed according to the fixed displacement value, and then the addition operation is performed on the product result of the mantissa segments after the exponent matching, to obtain a first-stage addition result. The four floating-point number multipliers in the first group may obtain four first-stage addition results. Then, each floating-point number multiplier outputs a first-stage addition result and a corresponding sign result and exponent addition result to the normalized processing circuit. The normalized processing circuit performs normalized processing on the input first-stage addition result and the corresponding sign result and exponent addition result that are of each group, and outputs a normalized FP32. The normalized processing circuit may obtain four normalized FP32s and output them as vector element-wise multiplication operation results.

The fixed displacement value is pre-calculated and stored. Because the mantissa segments output by the disassembly circuit are output to the corresponding floating-point number multiplier according to a fixed sequence, and the output of the floating-point number multiplier is fixedly output to the corresponding floating-point number adder, the floating-point number adder may pre-store the fixed displacement value, and fixed displacement values of the to-be-calculated floating-point numbers of different types may also be different. The fixed displacement value is related to positions and occupation widths of the mantissa segments corresponding to the product result of the mantissa segments in the mantissa of the original to-be-calculated floating-point number

**[0151]** The following describes a fixed displacement value corresponding to the FP32 by using an example.

Mantissa segments of the to-be-calculated floating-point number c1 (FP32) include mtsC11 and mtsC10, and mantissa segments of the to-be-calculated floating-point number d1 includes mtsD11 and mtsD10. The product results of the mantissa segments include mtsC11* mtsD11, mtsC11* mtsD10, mtsC10* mtsD11, and mtsC10* mtsD10. Using mtsC10* mtsD10 as a standard, a fixed displacement value of mtsC10* mtsD10 is 0. Because a bit difference between a sum of least significant bits of the two mantissa segments corresponding to mtsC10* mtsD11 and a sum of the least significant bits of the two mantissa segments corresponding to mtsC10* mtsD 10 is 12, the fixed displacement value of mtsC 10* mtsD 11 is 12. A fixed displacement value of mtsC 11 * mtsD10 is 12, and the fixed displacement value of mtsC11* mtsD11 is 24. That is, the fixed displacement values stored in the FP32 may be 0, 12, 12, and 24 in sequence.

It should be noted that the foregoing fixed displacement value represents a quantity of left displacement bits.

When the addition calculation is performed on mtsC11* mtsD11, mtsC11* mtsD10, mtsC10* mtsD11, and mtsC10* mtsD10, the floating-point number adder displaces mtsC11* mtsD10, mtsC10* mtsD11, and mtsC10* mtsD10 leftward by 12 bits, 12 bits, and 24 bits respectively, then the displaced mtsC11* mtsD10, mtsC10* mtsD11, mtsC10* mtsD10, and mtsC11* mtsD11 are added.

In the floating-point number vector inner product operation, two FP32 vectors whose lengths are 4 are input.

Each floating-point number adder in the first group obtains a corresponding fixed displacement value according to the type of the to-be-calculated floating-point number indicated by the input mode. Then, for the input product result of the mantissa segments of the floating-point number, the exponent matching is performed according to the fixed displacement value, and then the addition operation is performed on the product result of the mantissa segments after the exponent matching, to obtain a first-stage addition result. The four floating-point number multipliers in the first group may obtain four first-stage addition results. Then, the floating-point number multiplier of the first group divides the four first-stage addition results into two groups, each group of addition results are output to a floating-point number adder of the second group. When the first-stage addition results are output to the floating-point number adder of the second group, the sign results and the addition results of the exponents corresponding to the first-stage addition results are also output to the floating-point number adder of the second group.

The floating-point number adders of the second group compare maximum exponents of the two input addition results of the exponents and calculates the exponent difference. Then, the exponent matching is performed on the two input first-stage addition results based on the calculated exponent difference, and then addition calculations are performed on the first-stage addition results after the exponent matching, to obtain second-stage addition results. The floating-point number adders of the second group may obtain two second-stage addition results (here, the floating-point number adders of the second group essentially completes an addition calculation on a complete floating-point number, and a second-stage addition result output by the floating-point number adder of the second group is a complete floating-point number), and then output the second-stage addition results to the floating-point number adder of a third group.

The floating-point number adders of the third group perform addition calculation on the second-stage addition results, to obtain third-stage addition results. Finally, the floating-point number adders of the third group output the third-stage addition results to the normalized processing circuit, and after the normalized processing circuit performs normalized processing, one normalized FP32 is obtained and output as a floating-point number vector inner product calculation result.

In the floating-point number vector element-wise multiplication, the FP64 scalar is input.

Each floating-point number adder in the first group obtains a corresponding fixed displacement value according to the type of the to-be-calculated floating-point number indicated by the input mode. Then, for the input product result of the mantissa segments of the floating-point number, the exponent matching is performed according to the fixed displacement value, and then the addition operation is performed on the product result of the mantissa segments after the exponent matching, to obtain a first-stage addition result. The four floating-point number multipliers in the first group may obtain four first-stage addition results. Then, the floating-point number adders of the first group divide the four first-stage addition results into two groups, each group of addition results are output to one floating-point number adder of the second group. At the same time, the input XOR result of the signs and the addition result of the exponents are also output to one floating-point number adder of the second group.

The following uses an example to describe the fixed displacement value corresponding to the FP64 in the floating-point number adder of the first group.

Mantissa segments of the to-be-calculated floating-point number E include mtsE3, mtsE2, mtsE1, and mtsE0, and mantissa segments of the to-be-calculated floating-point number F includes mtsF3, mtsF2, mtsF1, and mtsF0. In the product result of each mantissa segment:
using mtsE0* mtsF0 as a standard, a fixed displacement value of mtsE0* mtsF1 is 13, a fixed displacement values of mtsE1* mtsF0 is 13, and a fixed displacement value of mtsE1* mtsF1 is 26. The four mantissa product results form a group and are added by one floating-point number adder. The fixed displacement values stored in the floating-point number adder corresponding to the FP64 may be 0, 13, 13, and 26 in sequence.

Using mtsE0* mtsF2 as a standard, a fixed displacement value of mtsE2* mtsF0 is 0, that is, no displacement is required. A fixed displacement value of mtsE2* mtsF1 is 13, and a fixed displacement value of mtsE3* mtsF0 is 13. The four mantissa product results form a group and are added by one floating-point number adder. The fixed displacement values stored in the floating-point number adder corresponding to the FP64 may be 0, 0, 13, and 13 in sequence.

Using mtsE0* mtsF3 as a standard, a fixed displacement value of mtsE1* mtsF2 is 0, that is, no displacement is required. A fixed displacement value of mtsE1* mtsF3 is 13, and a fixed displacement value of mtsE2* mtsF2 is 13. The four mantissa product results form a group and are added by one floating-point number adder. The fixed displacement values stored in the floating-point number adder corresponding to the FP64 may be 0, 0, 13, and 13 in sequence.

Using mtsE3* mtsF1 as a standard, a fixed displacement value of mtsE2* mtsF3 is 13, a fixed displacement value of mtsE3 * mtsF2 is 13, and a fixed displacement value of mtsE3 * mtsF3 is 26. The four mantissa product results form a group and are added by one floating-point number adder. The fixed displacement values stored in the floating-point number adder corresponding to the FP64 may be 0, 13, 13, and 26 in sequence.

It should be noted that the foregoing fixed displacement value represents a quantity of left displacement bits.

When the floating-point number adder performs addition calculations on mtsE0* mtsF0, mtsE0* mtsF1, mtsE1* mtsF0, and mtsE1* mtsF1, the floating-point number adder displaces mtsE0* mtsF1, mtsE1* mtsF0, and mtsE1* mtsF leftward by 13 bits, 13 bits, and 26 bits respectively, then the displaced mtsE0* mtsF1, mtsE1* mtsF0, mtsE1* mtsF, and mtsE0* mtsF0 are added. When mtsE0* mtsF2, mtsE2* mtsF0, mtsE2* mtsF1, and mtsE3* mtsF0 are added, mtsE2* mtsF1 and mtsE3* mtsF0 are displaced leftward by 13 bits and 13 bits respectively, then the displaced mtsE2* mtsF1, mtsE3* mtsF0, mtsE0* mtsF2, and mtsE2* mtsF0 are added. When mtsE0* mtsF3, mtsE1* mtsF2, mtsE1 *mtsF3, and mtsE2* mtsF2 are added, mtsE1 *mtsF3 and mtsE2* mtsF2 are displaced leftward by 13 bits and 13 bits respectively, then the displaced mtsE1 *mtsF3, mtsE2* mtsF2, mtsE0* mtsF3, and mtsE1* mtsF2 are added. When mtsE3* mtsF1, mtsE2* mtsF3, mtsE3* mts F2, and mtsE3* mtsF3 are added, mtsE2* mtsF3, mtsE3* mts F2, and mtsE3* mtsF3 are displaced leftward by 13 bits, 13 bits, and 26 bits respectively, and then the displaced mtsE2* mtsF3, mtsE3* mts F2, mtsE3* mtsF3, and mtsE3* mtsF1 are added.

The floating-point number adders of the second group perform the exponent matching on the input first-stage addition results according to the fixed displacement value, and then perform the addition operation to obtain a second-stage addition result, and output the second-stage addition result to the floating-point number adders of the third group. In addition, the input XOR result of the signs and the addition result of the exponents are also output to the floating-point number adders of the third group.

Based on the foregoing example of the fixed displacement value stored in the floating-point number adders of the first group, the fixed displacement value corresponding to the FP64 in the floating-point number adders of the second group is described.

For example, four first-stage addition results are respectively P1, P2, P3, and P4, where P1 is obtained by adding mtsE1* mtsF1, mtsE1* mtsF0, mtsE0* mtsF1 and mtsE0* mtsF0 after displacement, P2 is obtained by adding mtsE3* mtsF0, mtsE2* mtsF1, mtsE2* mtsF0 and mtsE0* mtsF2 after displacement, P3 is obtained by adding mtsE2* mtsF2, mtsE1 *mtsF3, mtsE1* mtsF2 and mtsE0* mtsF3 after displacement, and P4 is obtained by adding mtsE3* mtsF3, mtsE3* mts F2, and mtsE2* mtsF3. The value of mtsE3* mtsF1 is obtained by adding the displaced values.

P1 and P2 are used as a group, and P1 is used as a standard. Because a bit difference between a least significant bit corresponding to a mantissa segment product result that is used as a standard and that is in the mantissa segment product result corresponding to P2 and a least significant bit corresponding to a mantissa segment product result that is used as a standard of mtsE0* mtsF0 and that is in the mantissa segment product result corresponding to P1 is 26, a fixed displacement value of P2 is 26. To be specific, the fixed displacement values corresponding to the FP64 that are stored in the corresponding floating-point number adder may be 0 and 26 in sequence. P3 and P4 are used as a group, where P3 is used as a standard, and the fixed displacement value of P4 is 13, that is, fixed displacement values that are corresponding to the FP64 and that are stored in a corresponding floating-point number adder may be 0 and 13 in sequence.

When performing the addition calculation on P1 and P2, the floating-point number adders of the second group first displace P2 leftward by 26 bits, and then add displaced P1 and P2. When the addition calculation is performed on P3 and P4, P4 is first displaced leftward by 13 bits, and then displaced P3 and P4 are added.

The floating-point number adders of the third group perform the exponent matching on the input second-stage addition results according to the fixed displacement value, and then perform the addition operation to obtain a third-stage addition result.

Based on the foregoing example of the fixed displacement value stored in the floating-point number adders of the first group, the fixed displacement value corresponding to the FP64 in the floating-point number adders of the second group is described in the following example.

For example, the third-stage addition result obtained by performing the addition calculation on the P1 and the P2 is Q1, and the third-stage addition result obtained by performing the addition calculation on the P3 and the P4 is Q2. A fixed displacement value of Q1 is 0, that is, no displacement is required, and a fixed displacement value of Q2 is 39. To be specific, the fixed displacement values corresponding to the FP64 that are stored in floating-point number multipliers of the third group are 0 and 39 in sequence.

It should be noted that the foregoing fixed displacement value represents a quantity of left displacement bits.

When performing an addition calculation on the Q1 and the Q2, the floating-point number adders of the third group first displace Q2 to leftward by 39 bits, and then adds the displaced Q2 and Q1.

Finally, the XOR result of the signs, the addition result of the exponents, and the third-stage addition result are output to the normalized processing circuit, and after the normalized processing circuit performs normalized processing, one normalized FP64 is obtained as a calculation result and output.

In the floating-point number vector inner product operation, two FP16 vectors whose lengths are 16 are input.

Each floating-point number adder of the first group performs addition calculation on the four input floating-point number product results, to obtain a first-stage addition result. The floating-point number adders of the first group may obtain four first-stage addition results, and then the four first-stage addition results are divided into two groups and output to the floating-point number adders of the second group respectively.

The floating-point number adders of the second group perform addition calculation on the input first-stage addition results, to obtain two second-stage addition results. The floating-point number adders of the second group output the two second-stage addition results to the floating-point number adders of the third group.

The floating-point number adders of the third group perform addition calculation on the second-stage addition results, to obtain third-stage addition results. Finally, the floating-point number adders of the third group output the third-stage addition results to the normalized processing circuit, and after the normalized processing circuit performs normalized processing, one normalized FP16 is obtained and output as a floating-point number vector inner product result.

It should be further noted that, in this embodiment of this application, the floating-point number vector element accumulation operation may be further implemented. In this operation type, the input to-be-calculated floating-point number is a floating-point number vector After obtaining the calculation instruction, the disassembly circuit determines that the calculation type indicated by the mode is the vector element accumulation operation. In this case, a floating-point number vector of a same type as an input to-be-calculated floating-point number vector may be first generated, and a value of each element in the generated floating-point number vector is 1. The input to-be-calculated floating-point number vector and the generated floating-point number vector may be used as the to-be-calculated floating-point number vector. Next, processing of the floating-point number vector element accumulation operation in step 801 to step 8032 is the same as processing of the floating-point number vector inner product operation in step 801 to step 8032, and details are not described herein again.

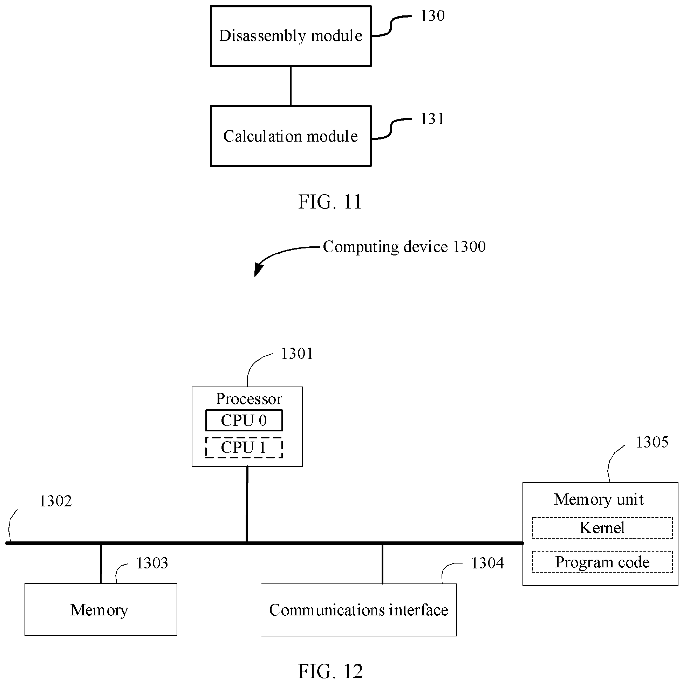

Based on a same technical concept, an embodiment of this application further provides a floating-point number calculation apparatus. The apparatus may be the foregoing operation unit. As shown in FIG. 11, the apparatus includes:

a disassembly module 130, configured to obtain a mode and a to-be-calculated floating-point number that are included in a calculation instruction; and disassemble the to-be-calculated floating-point number according to a preset rule, where the mode indicates an operation type of the to-be-calculated floating-point number; and

a calculation module 131, configured to complete processing of the calculation instruction based on the mode and a disassembled to-be-calculated floating-point number

**[0185]** It should be understood that the apparatus in this embodiment of this application may be implemented by using an application-specific integrated circuit (application-specific integrated circuit, ASIC), or may be implemented by using a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. Alternatively, when the floating-point number calculation methods shown in FIG. 1 to FIG. 10 may be implemented by software, the apparatus and modules of the apparatus may be software modules.

In a possible implementation, the to-be-calculated floating-point number is a high-precision floating-point number, and the disassembly module is configured to:
disassemble the to-be-calculated floating-point number into a plurality of low-precision floating-point numbers based on a mantissa of the to-be-calculated floating-point number

**[0187]** In a possible implementation, an exponent bit width of the disassembled to-be-calculated floating-point number is greater than an exponent bit width of the to-be-calculated floating-point number.

In a possible implementation, the disassembly module 130 is configured to:
disassemble the to-be-calculated floating-point number into a sign, an exponent, and a mantissa; and disassemble the mantissa of the to-be-calculated floating-point number into a plurality of mantissa segments.

In a possible implementation, the calculation module 131 includes a floating-point number multiplication unit and a floating-point number addition unit.

The floating-point number multiplication calculation unit is configured to perform an XOR calculation on the sign of the disassembled to-be-calculated floating-point number to obtain an XOR result of the sign, perform an addition calculation on the exponent of the disassembled to-be-calculated floating-point number to obtain an addition result of the exponent, perform a multiplication calculation on the mantissa segments from different disassembled to-be-calculated floating-point numbers and output a product result of the mantissa segments.

The floating-point number addition calculation unit is configured to: perform an addition calculation on the product result of the mantissa segments to obtain an addition result of the mantissa segments, and obtain a calculation result of the to-be-calculated floating-point number based on the mode, the addition result of the mantissa segments, the XOR result of the sign, and the addition result of the exponent.

It should be further noted that, when the floating-point number calculation apparatus provided in the foregoing embodiment calculates the floating-point number, division of the foregoing function modules is merely used as an example for description. In actual application, the foregoing functions may be allocated to different function modules for implementation according to a requirement, that is, an internal structure of the computing device is divided into different function modules to implement all or some of the functions described above. In addition, the floating-point number calculation apparatus provided in the foregoing embodiment belongs to a same concept as the floating-point number calculation method embodiment. For a specific implementation process thereof, refer to the method embodiment. Details are not described herein again.

An embodiment of this application further provides a chip. A structure of the chip may be the same as a structure of the chip 100 shown in FIG. 1. The chip may implement the floating-point number calculation method provided in embodiments of this application.

As shown in FIG. 12, an embodiment of this application provides a computing device 1300. The computing device 1300 includes at least one processor 1301, a bus system 1302, a memory 1303, a communications interface 1304, and a memory unit 1305.

The processor 1301 may be a central processing unit (central processing unit, CPU), a network processor (network processor, NP), a graphics processing unit (graphics processing unit, GPU) microprocessor, an application-specific integrated circuit (application-specific integrated circuit, ASIC), or one or more integrated circuits configured to control program execution in the solutions of this application.

The bus system 1302 may include a path for transmitting information between the foregoing components.

The memory 1303 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, and the like), a magnetic disk storage medium or another magnetic storage device, or any other medium that can be configured to carry or store expected program code in an instruction form or a data structure form and that can be accessed by a computer. However, the memory is not limited thereto. The memory may exist independently, and is connected to the processor through the bus. The memory may alternatively be integrated with the processor.

The memory unit 1305 is configured to store an application program code for executing the solutions in this application, and the processor 1301 controls the execution. The processor 1301 is configured to execute the application program code stored in the memory unit 1305, to implement the floating-point number calculation method provided in this application.

In specific implementation, in an embodiment, the processor 1301 may include one or more processors 1301.

The communications interface 1304 is configured to implement connection and communication between the computing device 1300 and an external device.

In conclusion, the computing device may obtain a plurality of low-precision floating-point numbers by disassembling the to-be-calculated floating-point number, and the plurality of floating-point number multipliers perform operation processing on the disassembled floating-point numbers in parallel, so that a same computing device can support operations of floating-point numbers with different precisions, and a dedicated computing unit does not need to be set to perform operations of floating-point numbers with specified precision. The entire computing device has higher compatibility. On the other hand, because a single computing device can complete operations on floating-point numbers with different precisions, a number of floating-point number arithmetic units with different precisions is reduced, and the costs are reduced. In addition, because the plurality of floating-point number multipliers may separately perform parallel operations on the disassembled floating-point numbers, processing delay is reduced, and processing efficiency is improved.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, all or some of the processes or the functions according to embodiments of this application are generated. The computer may be a general-purpose computer, a dedicated computer, a computer network, or other programmable apparatuses. The computer instructions may be stored in a computer readable storage medium or may be transmitted from one computer readable storage medium to another computer readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state drive (solid state drive, SSD).

The foregoing descriptions are merely embodiments of this application, but are not intended to limit this application. Any modification, equivalent replacement, or improvement made without departing from the spirit and principle of this application should fall within the protection scope of this application.

## Claims

1. An operation unit, comprising a disassembly circuit and an arithmetic unit, wherein

   the disassembly circuit is configured to: obtain a mode and a to-be-calculated floating-point number that are comprised in a calculation instruction; and disassemble the to-be-calculated floating-point number according to a preset rule, wherein the mode indicates an operation type of the to-be-calculated floating-point number; and the arithmetic unit is configured to complete processing of the calculation instruction based on the mode and a disassembled to-be-calculated floating-point number.

2. The operation unit according to claim 1, wherein
   the disassembly circuit is further configured to disassemble the to-be-calculated floating-point number into a plurality of low-precision floating-point numbers based on a mantissa of the to-be-calculated floating-point number when the to-be-calculated floating-point number is a high-precision floating-point number.

3. The operation unit according to claim 1, wherein an exponent bit width of the disassembled to-be-calculated floating-point number is greater than an exponent bit width of the to-be-calculated floating-point number.

4. The operation unit according to claim 1, wherein
   the disassembly circuit is further configured to: disassemble the to-be-calculated floating-point number into a sign, an exponent, and a mantissa; and disassemble the mantissa of the to-be-calculated floating-point number into a plurality of mantissa segments.

5. The operation unit according to any one of claims 1 to 4, wherein the arithmetic unit comprises a floating-point number multiplier and a floating-point number adder; and
the floating-point number multiplier is configured to perform an addition operation on the disassembled to-be-calculated floating-point number, and the floating-point number adder is configured to perform an addition operation on the disassembled to-be-calculated floating-point number.

6. A floating-point number calculation method, comprising:

obtaining a mode and a to-be-calculated floating-point number that are comprised in a calculation instruction; disassembling the to-be-calculated floating-point number according to a preset rule, wherein the mode indicates an operation type of the to-be-calculated floating-point number; and
completing processing of the calculation instruction based on the mode and a disassembled to-be-calculated floating-point number.

7. The method according to claim 6, wherein the to-be-calculated floating-point number is a high-precision floating-point number, and the disassembling the to-be-calculated floating-point number according to a preset rule comprises:
disassembling the to-be-calculated floating-point number into a plurality of low-precision floating-point numbers based on a mantissa of the to-be-calculated floating-point number

8. The method according to claim 6, wherein an exponent bit width of the disassembled to-be-calculated floating-point number is greater than an exponent bit width of the to-be-calculated floating-point number.

9. The apparatus according to claim 6, wherein the disassembling the to-be-calculated floating-point number according to a preset rule comprises:
disassembling the to-be-calculated floating-point number into a sign, an exponent, and a mantissa; and disassembling the mantissa of the to-be-calculated floating-point number into a plurality of mantissa segments.

10. The method according to claim 6, wherein the completing processing of the calculation instruction based on the mode and a disassembled to-be-calculated floating-point number comprises:

performing an XOR calculation on the sign of the disassembled to-be-calculated floating-point number to obtain an XOR result of the sign, performing an addition calculation on the exponent of the disassembled to-be-calculated floating-point number to obtain an addition result of the exponent, performing a multiplication calculation on the mantissa segments from different disassembled to-be-calculated floating-point numbers, and outputting a product result of the mantissa segments; and
performing an addition calculation on the product result of the mantissa segments to obtain an addition result of the mantissa segments, and obtaining a calculation result of the to-be-calculated floating-point number based on the mode, the addition result of the mantissa segments, the XOR result of the sign, and the addition result of the exponent.

11. A floating-point number calculation apparatus, comprising:

a disassembly module, configured to: obtain a mode and a to-be-calculated floating-point number that are comprised in a calculation instruction; and disassemble the to-be-calculated floating-point number according to a preset rule, wherein the mode indicates an operation type of the to-be-calculated floating-point number; and
a calculation module, configured to complete processing of the calculation instruction based on the mode and a disassembled to-be-calculated floating-point number.

12. The apparatus according to claim 11, wherein the to-be-calculated floating-point number is a high-precision floating-point number, and the disassembly module is configured to:
disassemble the to-be-calculated floating-point number into a plurality of low-precision floating-point numbers based on a mantissa of the to-be-calculated floating-point number

13. The apparatus according to claim 11, wherein an exponent bit width of the disassembled to-be-calculated floating-point number is greater than an exponent bit width of the to-be-calculated floating-point number.

**14.** The apparatus according to claim 11, wherein the disassembly module is configured to:
disassemble the to-be-calculated floating-point number into a sign, an exponent, and a mantissa; and disassemble the mantissa of the to-be-calculated floating-point number into a plurality of mantissa segments.

**15.** A chip, comprising an operation unit, wherein the operation unit is configured to implement a function implemented by the operation unit according to any one of claims 1 to 5.

**16.** A computing device, comprising a mainboard and the chip according to claim 18, wherein the chip is disposed on the mainboard, and the chip comprises an operation unit, wherein the operation unit is configured to implement a function implemented by the operation unit according to any one of claims 1 to 5.

1 bit
Sign

5 bits
Exponent

10 bits
Mantissa

FIG. 1

1 bit
Sign

8 bits
Exponent

23 bits
Mantissa

...

...

FIG. 2

1 bit
Sign

11 bits
Exponent

52 bits
Mantissa

...

...

FIG. 3

FIG. 4

Floating-point number arithmetic unit 22

Disassembly circuit 21

Floating-point number disassembly subcircuit 211

Mantissa disassembly subcircuit 212

Arithmetic unit 222

Floating-point number multiplier 2221

Floating-point number adder 2222

FIG. 5

Disassembly circuit

FP16 floating-point number disassembly subcircuit

FP32 floating-point number disassembly subcircuit

FP32 Mantissa disassembly subcircuit

FP64 floating-point number disassembly subcircuit

FP64 Mantissa disassembly subcircuit

Output selection circuit

Mode

FIG. 6

FIG. 7

A disassembly circuit obtains a mode and a to-be-calculated floating-point number that are included in a calculation instruction

801

The disassembly circuit disassembles the to-be-calculated floating-point number according to a preset rule, where the mode indicates an operation type of the to-be-calculated floating-point number

802

An arithmetic unit completes processing of the calculation instruction based on the mode and a disassembled to-be-calculated floating-point number

803

FIG. 8

A floating-point number multiplier in an arithmetic unit performs an XOR calculation on an input sign of a disassembled to-be-calculated floating-point number, performs an addition calculation on an input exponent of the disassembled to-be-calculated floating-point number, performs a multiplication calculation on input mantissa segments of the disassembled to-be-calculated floating-point number, and outputs an XOR result of the sign, an addition result of the exponent, and a product result of the mantissa segments to a floating-point number adder in the arithmetic unit

8031

The floating-point number adder performs an addition calculation on an input product result of the mantissa segments to obtain an addition result of the mantissa segments, and outputs a calculation result of the to-be-calculated floating-point number based on a calculation instruction mode, an addition result of the mantissa segments, the XOR result of the sign, and the addition result of the exponent

8032

FIG. 9

FIG. 10

FIG. 11

Computing device 1300

FIG. 12

## INTERNATIONAL SEARCH REPORT

| | International application No. |
|---|---|
| | **PCT/CN2021/106965** |

**A. CLASSIFICATION OF SUBJECT MATTER**

G06F 7/485(2006.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC: 浮点数, 符号, 阶码, 指数, 尾数, 拆解, 拆分, 分解, 分离, floating point, sign, exponent, mantissa, decompose, segment

**C. DOCUMENTS CONSIDERED TO BE RELEVANT**

| Category* | Citation of document, with indication, where appropriate, of the relevant passages | Relevant to claim No. |
|---|---|---|
| X | CN 105224284 A (BEIJING QIYI CENTURY SCIENCE & TECHNOLOGY CO., LTD.) 06 January 2016 (2016-01-06) <br> description paragraphs [0071]-[0168] | 1-3, 5-8, 10-13, 15-16 |
| Y | CN 105224284 A (BEIJING QIYI CENTURY SCIENCE & TECHNOLOGY CO., LTD.) 06 January 2016 (2016-01-06) <br> description paragraphs [0071]-[0168] | 4, 9, 14 |
| Y | US 2017351493 A1 (THE MATHWORKS, INC.) 07 December 2017 (2017-12-07) <br> description, paragraphs [0083]-[0086] | 4, 9, 14 |
| A | CN 105224283 A (BEIJING QIYI CENTURY SCIENCE & TECHNOLOGY CO., LTD.) 06 January 2016 (2016-01-06) <br> entire document | 1-16 |
| A | CN 109901813 A (SUZHOU POWERCORE INFORMATION TECH CO., LTD.) 18 June 2019 (2019-06-18) <br> entire document | 1-16 |
| A | CN 104133656 A (STATE GRID CORPORATION OF CHINA et al.) 05 November 2014 (2014-11-05) <br> entire document | 1-16 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 September 2021** | **14 October 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/106965**

**C.    DOCUMENTS CONSIDERED TO BE RELEVANT**

| Category* | Citation of document, with indication, where appropriate, of the relevant passages | Relevant to claim No. |
|---|---|---|
| A | US 2019339937 A1 (MICROSOFT TECHNOLOGY LICENSING, L.L.C.) 07 November 2019 (2019-11-07)<br>entire document | 1-16 |

Form PCT/ISA/210 (second sheet) (January 2015)

**INTERNATIONAL SEARCH REPORT**
Information on patent family members

International application No.

**PCT/CN2021/106965**

| Patent document cited in search report | | | Publication date (day/month/year) | Patent family member(s) | | | Publication date (day/month/year) |
|---|---|---|---|---|---|---|---|
| CN | 105224284 | A | 06 January 2016 | CN | 105224284 | B | 08 December 2017 |
| US | 2017351493 | A1 | 07 December 2017 | US | 10140099 | B2 | 27 November 2018 |
| | | | | EP | 3252594 | A1 | 06 December 2017 |
| | | | | US | 2019332732 | A1 | 31 October 2019 |
| CN | 105224283 | A | 06 January 2016 | CN | 105224283 | B | 08 December 2017 |
| CN | 109901813 | A | 18 June 2019 | | None | | |
| CN | 104133656 | A | 05 November 2014 | | None | | |
| US | 2019339937 | A1 | 07 November 2019 | US | 10691413 | B2 | 23 June 2020 |
| | | | | EP | 3788470 | A1 | 10 March 2021 |
| | | | | CN | 112074806 | A | 11 December 2020 |
| | | | | WO | 2019212836 | A1 | 07 November 2019 |
| | | | | IN | 202047045555 | A | 30 October 2020 |

Form PCT/ISA/210 (patent family annex) (January 2015)